(19) Europäisches Patentamt
European Patent Office
Office européen des brevets

(11) **EP 4 372 518 A1**

(12) **EUROPEAN PATENT APPLICATION**
published in accordance with Art. 153(4) EPC

(43) Date of publication:
**22.05.2024 Bulletin 2024/21**

(21) Application number: **23841583.0**

(22) Date of filing: **14.09.2023**

(51) International Patent Classification (IPC):
***G06F*** */ (2006.01)*

(86) International application number:
**PCT/CN2023/118842**

(87) International publication number:
**WO 2024/067129 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 CN 202211206943**

(71) Applicant: **Huawei Technologies Co., Ltd.**
**Shenzhen, Guangdong 518129 (CN)**

(72) Inventors:
- **WENG, Bingya**
  **Shenzhen**
  **Guangdong 518129 (CN)**
- **LI, Ze**
  **Shenzhen**
  **Guangdong 518129 (CN)**

(74) Representative: **Gill Jennings & Every LLP**
**The Broadgate Tower**
**20 Primrose Street**
**London EC2A 2ES (GB)**

# (54) SYSTEM, SONG LIST GENERATION METHOD, AND ELECTRONIC DEVICE

(57) This application provides a system, a playlist generation method, and an electronic device. The system includes a server and an electronic device. The electronic device sends first request information to the server in response to a detected operation of creating a first playlist by a user, where the first request information is used to request a name and a description of the first playlist; the server obtains playlist information of the first playlist of the electronic device; the server determines the name and the description of the first playlist based on the playlist information of the first playlist; the server sends the name and the description of the first playlist to the electronic device; and the electronic device displays the name and the description of the first playlist. In embodiments of this application, a name and a description of a playlist can be automatically generated, and the user does not need to manually add the name and the description. The name and the description that are generated can accurately reflect features of songs in the playlist, thereby reducing operation steps for the user and improving user experience.

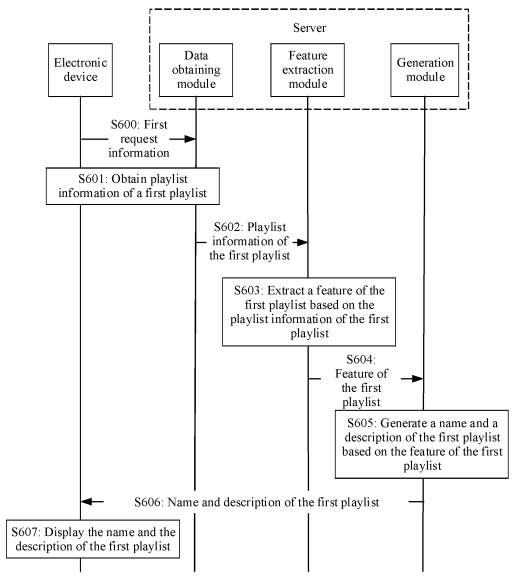


FIG. 6

EP 4 372 518 A1

## Description

This application claims priority to Chinese Patent Application No. 202211206943.0, filed with the China National Intellectual Property Administration on September 30, 2022, and entitled "SYSTEM, PLAYLIST GENERATION METHOD, AND ELECTRONIC DEVICE", which is incorporated herein by reference in its entirety.

## TECHNICAL FIELD

This application relates to the field of electronic devices, and more specifically, to a system, a playlist generation method, and an electronic device.

## BACKGROUND

A music application is an application that is frequently used by a user. When using the music application, the user may create a playlist. When creating the playlist, the user not only needs to add a song to the playlist, but also needs to manually enter and add a name, a description, and the like of the playlist. Operation steps are cumbersome and user experience is reduced.

## SUMMARY

This application provides a system, a playlist generation method, and an electronic device. According to the method, a name and a description of a playlist can be automatically generated, and a user does not need to manually add the name and the description. The name and the description that are generated can accurately reflect features of songs in the playlist, thereby reducing operation steps for the user and improving user experience.

According to a first aspect, a system is provided, where the system includes a server and an electronic device. The electronic device sends first request information to the server in response to a detected operation of creating a first playlist by a user, where the first request information is used to request a name and a description of the first playlist; the server obtains playlist information of the first playlist of the electronic device, where the first playlist includes a first song, and the playlist information of the first playlist includes lyric information and/or audio information of the first song; the server determines the name and the description of the first playlist based on the playlist information of the first playlist; the server sends the name and the description of the first playlist to the electronic device; and the electronic device displays the name and the description of the first playlist.

In an embodiment of this application, when the user creates a playlist and adds a song to the playlist, the electronic device may automatically display a name and a description of the playlist. The name and the description of the playlist match songs in the playlist, and reflect features of the songs in the playlist. Therefore, the user does not need to manually add the name and the description of the playlist, thereby reducing operation steps for the user and improving user experience.

With reference to the first aspect, in some implementations of the first aspect, the server further sends a cover of the first playlist to the electronic device, where the cover of the first playlist is determined based on the playlist information of the first playlist; and the electronic device further displays the cover of the first playlist.

In an embodiment of this application, the electronic device may not only automatically display the name of the playlist and the description of the playlist, but also display the cover of the playlist. The cover also matches the songs in the playlist, and reflects the features of the songs in the playlist. Therefore, the user does not need to manually add the cover of the playlist, thereby reducing operation steps for the user and improving user experience.

With reference to the first aspect, in some implementations of the first aspect, that the server determines the name and the description of the first playlist based on the playlist information of the first playlist includes: The server determines a plurality of covers, names, and descriptions based on the playlist information of the first playlist, where the plurality of covers include a first cover and a second cover, the plurality of names include a first playlist name and a second playlist name, the plurality of descriptions include a first playlist description and a second playlist description, the first cover is associated with the first playlist name and the first playlist description, and the second cover is associated with the second playlist name and the second playlist description.

With reference to the first aspect, in some implementations of the first aspect, the server further sends the plurality of covers to the electronic device; and that the server sends the name and the description of the first playlist to the electronic device includes: The server sends the plurality of names and the plurality of descriptions to the electronic device.

With reference to the first aspect, in some implementations of the first aspect, before the electronic device displays the name and the description of the first playlist, the electronic device further displays a first interface, where the first interface includes the first cover and the second cover; and that the electronic device displays the name and the description of the first playlist includes: The electronic device displays the first cover, the first playlist name, and the first playlist description in response to a detected selection operation of the user on the first interface.

In an embodiment of this application, names, descriptions, and covers of a plurality of playlists may be generated based on songs in the playlists. Each cover may correspond to a name and a description of one playlist. The user may select a different cover, so that the electronic device displays a name and a description of a playlist corresponding to the cover, thereby enriching user selections and improving user experience.

With reference to the first aspect, in some implementations of the first aspect, the playlist information of the first playlist further includes a cover that is uploaded by the user and that is of the first playlist.

With reference to the first aspect, in some implementations of the first aspect, the electronic device further sends second request information to the server in response to an operation of modifying the first playlist to a second playlist by the user, where the second request information is used to request a name and a description of the second playlist; the server obtains playlist information of the second playlist of the electronic device, where the playlist information of the second playlist includes lyric information and/or audio information of a song in the second playlist; the server determines the name and the description of the second playlist based on the playlist information of the second playlist; the server sends the name and the description of the second playlist to the electronic device; and the electronic device displays the name and the description of the second playlist, where the name of the second playlist is different from the name of the first playlist, and/or the description of the second playlist is different from the description of the first playlist.

With reference to the first aspect, in some implementations of the first aspect, the server sends a cover of the second playlist to the electronic device, where the cover of the second playlist is determined based on the playlist information of the second playlist; and the electronic device displays a cover of the second playlist, where the cover of the second playlist is different from the cover of the first playlist.

With reference to the first aspect, in some implementations of the first aspect, the operation of modifying the first playlist to a second playlist includes: deleting a song from the first playlist and/or adding a song to the first playlist and/or changing the cover of the first playlist.

With reference to the first aspect, in some implementations of the first aspect, that the server determines the name and the description of the second playlist based on the playlist information of the second playlist includes: The server determines whether the second playlist is a modified playlist; if determining that the second playlist is the modified playlist, the server determines a change difference degree of the song information of the second playlist; and if the change difference degree of the playlist information of the second playlist exceeds a first threshold, the server determines the name and the description of the first playlist based on the playlist information of the second playlist.

With reference to the first aspect, in some implementations of the first aspect, that the server determines a change difference degree of the playlist information of the second playlist includes: The server determines the change difference degree of the playlist information of the second playlist according to the following formula:

$$\delta = n_{add} + n_{del}$$

$\delta$ is the change difference degree of the playlist information of the second playlist, $n_{add}$ is a quantity of songs added to the second playlist, and $n_{del}$ is a quantity of songs deleted from the second playlist, or the server determines a change difference degree of the playlist information of the first playlist according to the following formula:

$$\delta = \frac{n_{add} + n_{del}}{n}$$

$\delta$ is the change difference degree of the playlist information of the second playlist, $n_{add}$ is the quantity of songs added to the second playlist, $n_{del}$ is the quantity of songs deleted from the second playlist, and n is a quantity of songs in the first playlist, or the server determines the change difference degree of the playlist information of the first playlist according to the following formula:

$$\delta = \mathrm{Dis}(V_{new}, V_{orig})$$

$\delta$ is the change difference degree of the playlist information of the second playlist, $V_{new}$ is a feature vector of the second playlist, $V_{orig}$ is a feature vector of the first playlist, and Dis() is a measurement function of a distance between the vectors.

With reference to the first aspect, in some implementations of the first aspect, the playlist information of the first playlist further includes song names of the N songs and/or artists of the N songs.

With reference to the first aspect, in some implementations of the first aspect, the electronic device shares the first playlist with a second user; after the first playlist is modified by the second user to a third playlist, the server obtains playlist information of the third playlist, where the playlist information of the third playlist includes lyric information and/or audio information of a song in the third playlist; the server determines a name and a description of the third playlist based on the playlist information of the third playlist; the server sends the name and the description of the third playlist to the electronic device; and the electronic device displays the name and the description of the third playlist, where the name of the third playlist is different from the name of the first playlist, and/or the description of the third playlist is different from the description of the first playlist.

According to a second aspect, a playlist generation method is provided, where the method is applied to an electronic device, and the method includes: sending first request information to a server in response to a detected operation of creating a first playlist by a user, where the first request information is used to request a name and a description of the first playlist, and the first playlist includes a first song; obtaining the name and the description of the first playlist from the server, where the playlist name and the description of the first playlist are generated by the server based on playlist information of the first playlist, and the playlist information of the first playlist includes lyric information and/or audio information of the first song; and displaying the playlist name and the description of the first playlist.

In an embodiment of this application, when the user creates a playlist and adds a song to the playlist, the electronic device may automatically display a name and a description of the playlist. The name and the description of the playlist match songs in the playlist, and reflect features of the songs in the playlist. Therefore, the user does not need to manually add the name and the description of the playlist, thereby reducing operation steps for the user and improving user experience.

With reference to the second aspect, in some implementations of the second aspect, the method further includes: obtaining a cover of the first playlist from the server, where the cover of the first playlist is determined by the server based on the playlist information of the first playlist; and displaying the cover of the first playlist.

In an embodiment of this application, the electronic device may not only automatically display the name of the playlist and the description of the playlist, but also display the cover of the playlist. The cover also matches the songs in the playlist, and reflects the features of the songs in the playlist. Therefore, the user does not need to manually add the cover of the playlist, thereby reducing operation steps for the user and improving user experience.

With reference to the second aspect, in some implementations of the second aspect, the receiving a cover of the first playlist includes: receiving a plurality of covers of the first playlist, where the plurality of covers include a first cover and a second cover, the name of the first playlist includes a first playlist name and a second playlist name, the description of the first playlist includes a first playlist description and a second playlist description, the first cover is associated with the first playlist name and the first playlist description, and the second cover is associated with the second playlist name and the second playlist description.

In an embodiment of this application, names, descriptions, and covers of a plurality of playlists may be generated based on songs in the playlists. Each cover may correspond to a name and a description of one playlist. The user may select a different cover, so that the electronic device displays a name and a description of a playlist corresponding to the cover, thereby enriching user selections and improving user experience.

With reference to the second aspect, in some implementations of the second aspect, before the displaying the cover of the first playlist, the method further includes: displaying a first interface, where the first interface includes the first cover and the second cover; and the displaying the name and the description of the first playlist includes: displaying the first cover, the first playlist name, and the first playlist description in response to a detected selection operation of the user on the first interface.

With reference to the second aspect, in some implementations of the second aspect, the playlist information of the first playlist further includes a cover that is uploaded by the user and that is of the first playlist.

With reference to the second aspect, in some implementations of the second aspect, the method further includes: sending second request information to the server in response to an operation of modifying the first playlist to a second playlist by the user, where the second request information is used to request a name and a description of the second playlist; obtaining the name and the description of the second playlist from the server, where the name and the description of the second playlist are generated by the server based on playlist information of the second playlist, and the playlist information of the second playlist includes lyric information and/or audio information of a song in the second playlist; and displaying the playlist name and the description of the second playlist, where the name of the second playlist is different from the name of the first playlist, and/or the description of the second playlist is different from the description of the first playlist.

With reference to the second aspect, in some implementations of the second aspect, the method further includes: obtaining a cover of the second playlist from the server, where the cover of the second playlist is determined by the server based on the playlist information of the second playlist; and displaying the cover of the second playlist, where the cover of the second playlist is different from the cover of the first playlist.

With reference to the second aspect, in some implementations of the second aspect, the operation of modifying the first playlist to a second playlist includes: deleting a song from the first playlist and/or adding a song to the first playlist and/or changing the cover of the first playlist.

With reference to the second aspect, in some implementations of the second aspect, the method further includes: sharing the first playlist with a second user; after the first playlist is modified by the second user to a third playlist, obtaining a name and a description of the third playlist from the server, where the name and the description of the third playlist are generated by the server based on playlist information of the third playlist, and the playlist information of the third playlist includes lyric information and/or audio information of a song in the third playlist; and displaying the name and the description of the third playlist, where the name of the third playlist is different from the name of the first playlist, and/or the description of the third playlist is different from the description of the first playlist.

According to a third aspect, a playlist generation method is provided, where the method is applied to a server, and the method includes: The server obtains playlist information of a first playlist of an electronic device, where the first playlist includes a first song, and the playlist information of the first playlist includes lyric information and/or audio information of the first song; the server determines a name and a description of the first playlist based on the playlist information of the first playlist; and the server sends the name and the description of the first playlist to the electronic device.

With reference to the third aspect, in some implementations of the third aspect, that the server determines a name and a description of the first playlist based on the playlist information of the first playlist includes: The server determines the name, the description, and a cover of the first playlist based on the playlist information of the first playlist.

With reference to the third aspect, in some implementations of the third aspect, the method further includes: The server sends a cover of the first playlist to the electronic device, where the cover of the first playlist is determined based on the playlist information of the first playlist.

With reference to the third aspect, in some implementations of the third aspect, that the server determines the name, the description, and a cover of the first playlist based on the playlist information of the first playlist includes: The server determines a plurality of covers, names, and descriptions based on the playlist information of the first playlist, where the plurality of covers include a first cover and a second cover, the plurality of names include a first playlist name and a second playlist name, the plurality of descriptions include a first playlist description and a second playlist description, the first cover is associated with the first playlist name and the first playlist description, and the second cover is associated with the second playlist name and the second playlist description.

With reference to the third aspect, in some implementations of the third aspect, the method further includes: The server further sends the plurality of covers to the electronic device; and that the server sends the name and the description of the first playlist to the electronic device includes: The server sends the plurality of names and the plurality of descriptions to the electronic device.

With reference to the third aspect, in some implementations of the third aspect, the method further includes: The server receives a cover of the first playlist, where the cover of the first playlist is uploaded by a user; and that the server determines a name and a description of the first playlist based on the playlist information of the first playlist includes: The server determines the name and the description, based on the cover of the first playlist and the playlist information of the first playlist.

With reference to the third aspect, in some implementations of the third aspect, the method further includes: The server obtains playlist information of a second playlist of the electronic device, where the second playlist is determined by the user by modifying the first playlist, and the playlist information of the second playlist includes lyric information and/or audio information of a song in the second playlist; the server determines a name and a description of the second playlist based on the playlist information of the second playlist; and the server sends the name and the description of the second playlist to the electronic device.

With reference to the third aspect, in some implementations of the third aspect, the method further includes: The server sends a cover of the second playlist to the electronic device, where the cover of the second playlist is generated based on the playlist information of the second playlist.

With reference to the third aspect, in some implementations of the third aspect, that the server determines a name and a description of the second playlist based on the playlist information of the second playlist includes: The server determines whether the second playlist is a modified playlist; if determining that the second playlist is the modified playlist, the server determines a change difference degree of the song information of the second playlist; and if the change difference degree of the playlist information of the second playlist exceeds a first threshold, the server determines the name and the description of the first playlist based on the playlist information of the second playlist.

With reference to the third aspect, in some implementations of the third aspect, that the server determines a change difference degree of the playlist information of the second playlist includes: The server determines the change difference degree of the playlist information of the second playlist according to the following formula:

$$\delta = n_{add} + n_{del}$$

$\delta$ is the change difference degree of the playlist information of the second playlist, $n_{add}$ is a quantity of songs added to the second playlist, and $n_{del}$ is a quantity of songs deleted from the second playlist, or the server determines a change difference degree of the playlist information of the first playlist according to the following formula:

$$\delta = \frac{n_{add} + n_{del}}{n}$$

$\delta$ is the change difference degree of the playlist information of the second playlist, $n_{add}$ is the quantity of songs added to the second playlist, $n_{del}$ is the quantity of songs deleted from the second playlist, and $n$ is a quantity of songs in the first playlist, or the server determines the change difference degree of the playlist information of the first playlist according to the following formula:

$$\delta = \mathrm{Dis}(V_{new}, V_{orig})$$

$\delta$ is the change difference degree of the playlist information of the second playlist, $V_{new}$ is a feature vector of the second playlist, $V_{orig}$ is a feature vector of the first playlist, and Dis() is a measurement function of a distance between the vectors.

With reference to the third aspect, in some implementations of the third aspect, the method further includes: After the first playlist is modified by a second user to a third playlist, the server obtains playlist information of the third playlist, where the playlist information of the third playlist includes lyric information and/or audio information of a song in the third playlist; the server determines a name and a description of the third playlist based on the playlist information of the third playlist; the server sends the name and the description of the third playlist to the electronic device.

According to a fourth aspect, an embodiment of this application provides an electronic device. The electronic device includes modules/units for performing the method in the foregoing aspects or any one of the possible designs of the foregoing aspects. The modules/units may be implemented by hardware, or may be implemented by hardware by executing corresponding software.

According to a fifth aspect, an embodiment of this application provides a chip. The chip is coupled to a memory in an electronic device, and is configured to invoke a computer program stored in the memory and perform the technical solutions in the foregoing aspects of embodiments of this application and any one of the possible designs of the foregoing aspects. In embodiments of this application, "coupling" means that two components are directly or indirectly connected to each other.

According to a sixth aspect, an embodiment of this application provides a computer-readable storage medium. The computer-readable storage medium includes a computer program. When the computer program is run on an electronic device, the electronic device is enabled to perform the technical solutions in the foregoing aspects and any one of the possible designs of the foregoing aspects.

According to a seventh aspect, an embodiment of this application provides a computer program. The computer program includes instructions. When the instructions are run on a computer, the computer is enabled to perform the technical solutions in the foregoing aspects and any one of the possible designs of the foregoing aspects.

According to an eighth aspect, an embodiment of this application provides a graphical user interface on an electronic device. The electronic device has a display, one or more memories, and one or more processors. The one or more processors are configured to execute one or more computer programs stored in the one or more memories. The graphical user interface includes a graphical user interface displayed when the electronic device performs the technical solutions in the foregoing aspects and any one of the possible designs of the foregoing aspects.

According to a ninth aspect, an embodiment of this application provides an electronic device. The electronic device includes one or more processors and one or more memories. The one or more memories store one or more computer programs, the one or more computer programs include instructions, and when the instructions are executed by the one or more processors, the foregoing aspects or any one of the possible implementations of the foregoing aspects are/is performed.

For beneficial effects of the fourth aspect to the ninth aspect, refer to beneficial effects of the first aspect. Details are not described again.

## BRIEF DESCRIPTION OF DRAWINGS

FIG. 1 is a schematic diagram of a structure of an electronic device according to an embodiment of this application;

FIG. 2 is a block diagram of a software structure of an example electronic device according to an embodiment of this application;

FIG. 3(a) to FIG. 3(d) are a group of GUIs for creating a playlist;

FIG. 4(a) to FIG. 4(m)-2 are a group of GUIs according to an embodiment of this application;

FIG. 5(a) to FIG. 5(g) are another group of GUIs according to an embodiment of this application;

FIG. 6 is a schematic interaction diagram of a playlist generation method according to an embodiment of this application;

FIG. 7 is a schematic interaction diagram of a playlist generation method according to an embodiment of this application;

FIG. 8 is a schematic flowchart of a playlist generation method according to an embodiment of this application;

FIG. 9 is a schematic composition diagram of a server according to an embodiment of this application; and

FIG. 10 is a schematic composition diagram of an electronic device according to an embodiment of this application.

## DESCRIPTION OF EMBODIMENTS

Terms used in the following embodiments are merely intended to describe specific embodiments, but are not intended to limit this application. The terms "one", "a" and "this" of singular forms used in this specification and the appended claims of this application are intended to include expressions such as "one or more", unless otherwise specified in the context clearly. It should be further understood that in the following embodiments of this application, "at least one" and "one or more" refer to one, two, or more. The term "and/or" is for describing an association relationship between associated objects and indicates that three relationships may exist. For example, A and/or B may indicate the following cases: Only A exists, both A and B exist, and only B exists, where A and B each may be singular or plural. A character "/" usually indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but is not limited to", unless otherwise specifically emphasized.

The following describes an electronic device, a user interface for such an electronic device, and embodiments for using such an electronic device. In some embodiments, the electronic device may be a portable electronic device that further includes other functions like a personal digital assistant function and/or a music player function, for example, a mobile phone, a tablet computer, or a wearable electronic device having a wireless communication function (for example, a smartwatch). An example embodiment of the portable electronic device includes but is not limited to a portable electronic device using iOS®, Android®, Microsoft®, or another operating system. The portable electronic device may alternatively be another portable electronic device, like a laptop (laptop) computer. It should be further understood that, in some other embodiments, the electronic device may not be the portable electronic device but a desktop computer.

FIG. 1 is an example of a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 100 may alternatively include one or more processors 110. The controller may generate an operation control signal based on instruction operation code and a time sequence signal, to complete control of instruction reading and instruction execution. In some other embodiments, a memory may be disposed in the processor 110, to store instructions and data. For example, the memory in the processor 110 may be a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves efficiency of processing the data or executing the instructions by the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device. The USB interface 130 may also be used to connect to a headset and play an audio through the headset.

It may be understood that an interface connection relationship between the modules shown in this embodiment of this application is merely an example for description, and does not constitute a limitation on the structure of the electronic device 100. In some other embodiments of this application, the electronic device 100 may alternatively use different interface connection manners or a combination of a plurality of interface connection manners in the foregoing embodiment.

The charging management module 140 is configured to receive charging input from a charger. The charger may be a wireless charger, or may be a wired charger. In some embodiments of wired charging, the charging management module 140 may receive charging input of the wired charger through the USB interface 130. In some embodiments of wireless charging, the charging management module 140 may receive wireless charging input through a wireless charging coil of the electronic device 100. The charging management module 140 supplies power to the electronic device by using the power management module 141 while charging the battery 142.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may also be multiplexed to improve antenna utilization. For example, the antenna 1 may be multiplexed as a diversity antenna of a wireless local area network. In other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some embodiments, at least some functional modules in the mobile communication module 150 may be disposed in the processor 110. In some embodiments, at least some function modules of the mobile communication module 150 and at least some modules of the processor 110 may be disposed in a same component.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processor module. The wireless communication module 160 receives the electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into the electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini LED, a micro LED, a micro OLED, quantum dot light-emitting diodes (quantum dot light-emitting diodes, QLED), or the like. In some embodiments, the electronic device 100 may include one or more displays 194.

In some embodiments of this application, when the display panel is made of a material like the OLED, the AMOLED, or the FLED, the display 194 in FIG. 1 may be bent. Herein, that the display 194 may be bent means that the display may be bent to any angle at any part, and may be maintained at the angle. For example, the display 194 may be folded in half from left to right, or may be folded in half up and down.

The display 194 of the electronic device 100 may be a flexible screen. Currently, the flexible screen attracts much attention due to unique features and huge potential of the flexible screen. Compared with a conventional screen, the flexible screen has features of strong flexibility and bending, and can provide a user with a new interaction manner based on the bending feature, to meet more requirements of the user for the electronic device. For an electronic device configured with a foldable display, the foldable display on the electronic device may be switched between a small screen in a folded form and a large screen in an unfolded form at any time. Therefore, the user uses a screen splitting function increasingly more frequently on the electronic device on which the foldable display is configured.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

An NPU is a neural-network (neural-network, NN) computing processor, quickly processes input information by drawing on a structure of a biological neural network, for example, by drawing on a transmission mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to expand a storage capability of the electronic device 100. The external memory card communicates with the processor 110 through the external memory interface 120, to implement a data storage function, for example, store files such as music and a video in the external memory card.

The internal memory 121 may be configured to store one or more computer programs, and the one or more computer programs include instructions. The processor 110 may run the instructions stored in the internal memory 121, so that the electronic device 100 performs the method provided in some embodiments of this application, various applications, data processing, and the like. The internal memory 121 may include a program storage area and a data storage area. The program storage area may store an operating system. The program storage area may further store one or more applications (such as a gallery and a contact), and the like. The data storage area may store data (for example, a photo and a contact) created during use of the electronic device 100. In addition, the internal memory 121 may include a high-speed random access memory, and may further include a nonvolatile memory, for example, one or more disk storage devices, a flash storage device, or a universal flash storage (universal flash storage, UFS). In some embodiments, the processor 110 may run the instructions stored in the internal memory 121 and/or the instructions stored in the memory that is disposed in the processor 110, so that the electronic device 100 performs the method provided in embodiments of this application, other applications, and data processing. The electronic device 100 may implement audio functions such as music playing and recording by using the audio module 170, the speaker 170A, the receiver 170B, the microphone 170C, the headset jack 170D, the application processor, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, like a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed on a same touch location but have different touch operation intensity may correspond to different operation instructions. For example, when a touch operation whose touch operation intensity is less than a first pressure threshold is performed on a messages application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (that is, axes X, Y, and Z) may be determined by using the gyro sensor 180B. The gyro sensor 180B may be configured to implement image stabilization during shooting. For example, when a shutter is pressed, the gyro sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyro sensor 180B may be further used in a navigation scenario and a motion-sensing game scenario.

The acceleration sensor 180E may detect magnitudes of accelerations of the electronic device 100 in various directions (generally on three axes). When the electronic device 100 is still, a magnitude and a direction of gravity may be detected. The acceleration sensor 180E may be further configured to identify a posture of the electronic device, and is used in applications such as switching between a landscape mode and a portrait mode or a pedometer.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and a touchscreen, also referred to as a "touchscreen", is formed by the touch sensor 180K and the display 194. The touch sensor 180K is configured to detect a touch operation performed on or near the touch sensor. The touch sensor may transfer the detected touch operation to the application processor to determine a type of a touch event. Visual output related to the touch operation may be provided through the display 194. In some other embodiments, the touch sensor 180K may also be disposed on a surface of the electronic device 100 at a location different from that of the display 194.

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers, namely, an application layer, an application framework layer, an Android runtime (Android runtime) and system library, and a kernel layer from top to bottom. The application layer may include a series of application packages.

As shown in FIG. 2, the application package may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls like a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides, for the application, various resources like a localized character string, an icon, an image, a layout file, and a video file.

The notification manager enables the application to display notification information in the status bar, and may be configured to convey a notification type message, which may automatically disappear after a short stay without user interaction. For example, the notification manager is configured to notify download completion, give a message notification, and the like. The notification manager may alternatively be a notification that appears in a top status bar of the system in a form of a graph or a scroll bar text, for example, a notification of an application that is run in the background, or may be a notification that appears on a screen in a form of a dialog window. For example, text information is prompted in the status bar, a prompt tone is played, the electronic device vibrates, or an indicator blinks.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The music application is an application that is frequently used by a user. When using the music application, the user may create a playlist. The following describes a process of creating the playlist with reference to a group of user graphical interfaces (graphical user interface, GUI) shown in FIG. 3(a) to FIG. 3(d).

As shown in FIG. 3(a), an electronic device displays an interface 301, where the interface 301 is an interface of a music application or an interface of a music website, the interface 301 includes a control 302, and the control 302 is configured to create a playlist. The electronic device may display a GUI shown in FIG. 3(b) in response to a detected operation of tapping the control 302 by a user.

As shown in FIG. 3(b), the electronic device may display an interface 303, and the user may name a new playlist on the interface 303, or the electronic device may automatically name the playlist. The electronic device may display a GUI shown in FIG. 3(c) in response to a detected operation of tapping a control 304 by the user.

As shown in FIG. 3(c), the electronic device may display an interface 305, and the interface 305 is a playlist interface. The electronic device may display a song in the playlist on the interface. The electronic device may add a song to the playlist in response to a detected operation of tapping a control 306 by the user.

As shown in FIG. 3(d), after the user adds a song #1, a song #2, a song #3, a song #4, and a song #5, the electronic device may display the song #1, the song #2, the song #3, the song #4, and the song #5 on the interface 305.

On the interface 305, the electronic device may not only add the song based on the operation of the user, but also determine a name of the playlist and a description of the playlist, and add a cover of the playlist based on operations of the user. In the foregoing process, the user needs to manually edit the name of the playlist and the description of the playlist, and manually add the cover of the playlist. Operation steps are cumbersome, and user experience is reduced. Based on this, embodiments of this application provide a playlist generation method and an electronic device, so that a name and a description of a playlist can be automatically generated. The generated name and description of the playlist match features of songs in the playlist, thereby simplifying operation steps for the user, and improving user experience.

The following describes, with reference to figures, example GUIs of a playlist generation method provided in embodiments of this application.

FIG. 4(a) to FIG. 4(m)-2 are a group of GUIs according to an embodiment of this application.

As shown in FIG. 4(a), an electronic device displays an interface 401, where the interface 401 may be an interface of a music application or an interface of a music website, the interface 401 may include a control 402, and the control 402 is configured to create a playlist. The electronic device may display a GUI shown in FIG. 4(b) in response to a detected operation of tapping the control 402 by a user.

As shown in FIG. 4(b), the electronic device may display an interface 403, where the user may name a new playlist on the interface 403, or the electronic device may automatically name the playlist, for example, as a new playlist #1. The electronic device may display a GUI shown in FIG. 4(c) in response to a detected operation of tapping a control 404 by the user.

As shown in FIG. 4(c), the electronic device may display an interface 405, where the interface 405 is a playlist interface. The electronic device may display a song in the playlist on the interface. The electronic device may add a song to the playlist in response to a detected operation of tapping a control 406 by the user.

As shown in FIG. 4(d), after the user adds an opera song #1 and an opera song #2 to the playlist, the electronic device may display the opera song #1 and the opera song #2 on the interface 405. In addition, the electronic device may further automatically display, on the interface 405, a playlist name and a playlist description that are determined based on the opera song #1 and the opera song #2.

In this embodiment of this application, when the user creates a playlist and adds a song to the playlist, the electronic device may automatically display a name and a description of the playlist. The name and the description of the playlist match songs in the playlist, and reflect features of the songs in the playlist. Therefore, the user does not need to manually add the name and the description of the playlist, thereby reducing operation steps for the user and improving user experience.

In some embodiments, the electronic device may further display, on the interface 405, a playlist cover determined based on the opera song #1 and the opera song #1.

In this embodiment of this application, the electronic device may not only automatically display the name of the playlist and the description of the playlist, but also display the cover of the playlist. The cover also matches the songs in the playlist, and reflects the features of the songs in the playlist. Therefore, the user does not need to manually add the cover of the playlist, thereby reducing operation steps for the user and improving user experience.

It should be noted that, for descriptions of determining the playlist name, the playlist description, and the playlist cover based on the songs, refer to the following description. Details are not described herein.

In some embodiments, a plurality of playlist covers may be determined based on the songs.

For example, as shown in FIG. 4(d), FIG. 4(e), and FIG. 4(f), the electronic device may display an interface 407 in response to a detected operation of tapping a cover #1 by the user. The interface 407 may include the cover #1 and a cover #2, and the cover #1 and the cover #2 are determined based on the songs. In response to a detected operation of tapping the cover #2 by the user, the electronic device may determine that the cover of the playlist is the cover #2, and display the cover #2 on the interface 405.

In some embodiments, the user may further upload a playlist cover.

For example, as shown in FIG. 4(d) and FIG. 4(e), the electronic device may display the interface 407 in response to a detected operation of tapping the cover #1 by the user. The interface 407 may include a control 408. In response to a detected operation of tapping the control 408 by the user, the electronic device may display an album interface, or may alternatively display a cover interface. An interface in the cover interface may be preset by the music application. The user can select a playlist cover on the album interface or the cover interface.

In some embodiments, the plurality of playlist covers may be determined based on the songs, and the plurality of playlist covers may separately correspond to different playlist names and/or playlist descriptions.

For example, as shown in FIG. 4(d), FIG. 4(e), and FIG. 4(g), the electronic device may display the cover #1 on the interface 405. A playlist name corresponding to the cover #1 is "Opera playlist", and a corresponding playlist description is "This playlist includes a total of two opera songs, which are an opera song #1 and an opera song #2 respectively, and lyrics include love elements". The electronic device may display the interface 407 in response to the detected operation of tapping the cover #1 by the user. The interface 407 includes the cover #1 and the cover #2, and the cover #1 and the cover #2 are determined based on the songs. In response to the detected operation of tapping the cover #2 by the user, the electronic device may determine that the cover of the playlist is the cover #2, and display the cover #2 on the interface 405. A playlist name corresponding to the cover #2 is "Love opera playlist", and a corresponding playlist description is "This playlist includes a total of two love opera songs, and all lyrics include love elements".

In this embodiment of this application, names, descriptions, and covers of a plurality of playlists may be generated based on songs in the playlists. Each cover may correspond to a name and a description of one playlist. The user may select a different cover, so that the electronic device displays a name and a description of a playlist corresponding to the cover, thereby enriching user selections and improving user experience.

In some embodiments, when the user continues to add a song, the electronic device may update one or more of the playlist name, the playlist description, and the playlist cover.

For example, as shown in FIG. 4(d) and FIG. 4(h), the user may continue to add an archaic song #1 to the playlist, the electronic device may update the playlist name to a "Chinese style playlist", a corresponding playlist description is "This playlist includes three songs, which are an opera song #1, an opera song #1, and an archaic song #1 respectively, and all lyrics include love elements", and a corresponding playlist cover may be updated to a cover #3.

In some embodiments, when the user deletes a song, the electronic device may update one or more of the playlist name, the playlist description, and the playlist cover.

For example, as shown in FIG. 4(h) and FIG. 4(i), the user may delete the opera song #1 and the opera song #2 from the playlist and retain the archaic song #1. The electronic device may update the playlist name to an "Archaic playlist", a corresponding playlist description is "This playlist includes one archaic song #1, and lyrics include love elements", and a corresponding playlist cover may be updated to a cover #4.

In this embodiment of this application, when the user modifies the playlist, the electronic device may update one or more of the name, the description, and the cover of the playlist in real time, and the user does not need to manually perform modification, thereby reducing operation steps for the user and improving user experience.

In the foregoing embodiment, the user may perform an editing operation, for example, adding a song or deleting a song, on the playlist in the electronic device, so that the electronic device may display the cover, the name, and the description that are generated based on playlist information of the playlist. In some other embodiments of this application, the user may further add a collaborator of the playlist, and the collaborator of the playlist may edit the playlist.

For example, as shown in FIG. 4(j) to FIG. 4(m)-2, an electronic device #1 of a user #1 includes a playlist #1. The electronic device #1 may display an interface 410 in response to a detected operation of tapping a control 409 by the user #1. The interface 410 is an interface for adding a playlist collaborator. The user #1 may add, on the interface, a user #2 as a collaborator of the playlist #1. After the user #1 adds the collaborator of the playlist #1 as the user #2, an electronic device #2 of the user #2 may display the playlist #1. When the user #2 edits the playlist #1, for example, deletes the opera song #1 and the opera song #2 from the playlist #1 and adds the archaic song #1, after the user #2 edits the playlist #1, the electronic device #1 and the electronic device #2 may display a cover, a name, and a description that are determined based on the edited playlist #1.

FIG. 5(a) to FIG. 5(g) are another group of GUIs according to an embodiment of this application.

As shown in FIG. 5(a), an electronic device displays an interface 501, where the interface 501 may be an interface of a music application or an interface of a music website, the interface 501 may include a control 502, and the control 502 is configured to create a playlist. The electronic device may display a GUI shown in FIG. 5(b) in response to a detected operation of tapping the control 502 by a user.

As shown in FIG. 5(b), the electronic device may display an interface 503, and the user may name a new playlist on the interface 503, or the electronic device may automatically name the playlist, for example, as a new playlist #1. The electronic device may display a GUI shown in FIG. 5(c) in response to a detected operation of tapping a control 504 by the user.

As shown in FIG. 5(c), the electronic device may display an interface 505, and the interface 505 is a playlist interface. The electronic device may display a song in the playlist on the interface. The electronic device may add a song to the playlist in response to a detected operation of tapping a control 506 by the user.

The user may not only add a song, but also add a cover of the playlist on the interface 505. The electronic device may display a cover #5 on the interface 505 in response to a detected operation of adding a playlist cover by the user.

As shown in FIG. 5(d), after the user adds the opera song #1 and the opera song #2 to the playlist, the electronic device may display the opera song #1 and the opera song #2 on the interface 405. In addition, the electronic device may further automatically display, on the interface 405, a playlist name and a playlist description that are determined based on the opera song #1, the opera song #2, and the cover #5.

It may be understood that, different from the GUIs shown in FIG. 4(a) to FIG. 4(m)-2, the playlist names and the playlist descriptions in the GUIs shown in FIG. 5(a) to FIG. 5(g) are determined based on songs in the playlist and the playlist cover.

In this embodiment of this application, when the user creates a playlist and adds a song to the playlist, the electronic device may automatically display a name and a description of the playlist. The name and the description of the playlist match songs in the playlist, and reflect features of the songs in the playlist. Therefore, the user does not need to manually add the name and the description of the playlist, thereby reducing operation steps for the user and improving user experience.

It should be noted that, for descriptions of determining the playlist name and the playlist description based on the songs and the playlist cover, refer to the following description. Details are not described herein.

In some embodiments, when the user continues to add a song, the electronic device may update one or more of the playlist name, the playlist description, and the playlist cover.

For example, as shown in FIG. 5(d) and FIG. 5(e), the user may continue to add the archaic song #1 to the playlist, the electronic device may update the playlist name to a "Chinese style playlist", a corresponding playlist description is "This playlist includes three songs, which are the opera song #1, the opera song #1, and the archaic song #1 respectively, and all lyrics include love elements", and a corresponding playlist cover may be updated to a cover #6.

In some embodiments, when the user deletes a song, the electronic device may update one or more of the playlist name, the playlist description, and the playlist cover.

For example, as shown in FIG. 5(e) and FIG. 5(f), the user may delete the opera song #1 and the opera song #2 from the playlist and retain the archaic song #1. The electronic device may update the playlist name to an "Archaic playlist", a corresponding playlist description is "This playlist includes one archaic song #1, and lyrics include love elements", and a corresponding playlist cover may be updated to a cover #7.

In this embodiment of this application, when the user modifies the playlist, the electronic device may update one or more of the name, the description, and the cover of the playlist in real time, and the user does not need to manually perform modification, thereby reducing operation steps for the user and improving user experience.

In some embodiments, when the user modifies the cover, the electronic device may update one or more of the playlist name, the playlist description, and the playlist cover.

For example, as shown in FIG. 5(f) and FIG. 5(g), the user may modify the cover #7 to a cover #8. The electronic device may update the playlist name to "Archaic love songs", and a corresponding playlist description is "This playlist includes one archaic song #1, and lyrics and the cover reflect love elements".

In this embodiment of this application, when the user modifies the cover, the electronic device may update one or more of the name and the description of the playlist in real time, and the user does not need to manually perform modification, thereby reducing operation steps for the user and improving user experience.

The foregoing describes GUIs related to the playlist generation method provided in embodiments of this application. The following describes in detail the playlist generation method provided in embodiments of this application.

FIG. 6 is a schematic interaction diagram of a playlist generation method according to an embodiment of this application. As shown in FIG. 6, the method is performed by an electronic device and a server. The server may be a server corresponding to a music application, or a server corresponding to a music website, or a playlist corresponding to a game application. The server includes a data obtaining module, a feature extraction module, and a generation module. The data obtaining module is configured to obtain playlist information of a playlist, the feature extraction module is configured to extract a feature of the playlist, and the generation module is configured to generate a name and a description of the playlist. The method includes:

S600: The electronic device sends first request information to the data obtaining module.

The server may communicate with the electronic device. When detecting that the user creates a first playlist, the electronic device may send the first request information to the data obtaining module of the server, where the first request information is used to request a name and a description of the first playlist.

S601: The data obtaining module obtains playlist information of the first playlist and the first request information.

Because the server may communicate with the electronic device, the data obtaining module may obtain the playlist information of the first playlist, where the first playlist includes a first song, and the playlist information of the first playlist includes audio information and/or lyric information of the first song. The first playlist may be a playlist in the music application, or the first playlist may be a playlist in the music website, or the first playlist may be a playlist in the game application. For example, if the first playlist is a playlist in the music application, the server is the server corresponding to the music application.

It may be understood that if the first song is instrumental music, the song does not have lyric information but the audio information is included.

In some embodiments, the playlist information of the first playlist further includes a song name of the first song, an artist of the first song, and the like.

For example, as shown in FIG. 4(a) to FIG. 4(d), the user adds the opera song #1 and the opera song #2 to the newly created playlist. The data obtaining module may obtain audio information and lyric information of the opera song #1 and the opera song #2 in the newly created playlist.

In some embodiments, the playlist information of the first playlist further includes cover information.

For example, as shown in FIG. 5(a) to FIG. 5(d), when creating the playlist, the user may not only add the song, but also upload the cover of the playlist. Therefore, the data obtaining module may not only obtain the audio information and the lyric information of the song in the playlist but also obtain the cover of the playlist.

S602: The data obtaining module sends the playlist information of the first playlist to the feature extraction module.

Correspondingly, the feature extraction module receives the playlist information that is of the first playlist and that is sent by the data obtaining module.

S603: The feature extraction module extracts a feature of the first playlist based on the playlist information of the first playlist.

After receiving the playlist information of the first playlist, the feature extraction module may extract a text feature of the first playlist based on lyric information in the playlist information of the first playlist, and may extract an audio feature of the first playlist based on audio information in the playlist information of the first playlist.

Songs of different styles may correspond to different text features. By extracting the text feature of the playlist, meanings expressed by lyrics of songs in the first playlist may be determined, and then styles of the songs may be determined. N songs in the first playlist may correspond to N lyrics. The feature extraction module may perform word segmentation processing on the N lyrics to extract the text feature of the playlist. For example, the text feature includes but is not limited to a word frequency, a word type, and a semantic feature. The semantic feature can be understood as a meaning of lexical expression. For example, a word "Xi'an" represents a city, a word "square" represents a place, and a word "love" represents a feeling of liking.

In this embodiment of this application, a meaning of a word expression in a lyric may be determined, and then a meaning of lyrics of an entire song may be determined.

For example, if lyrics of a song include one or more similar words such as "love", "like", and "lifetime", the lyrics may express love, and a style of the song may be related to love.

For example, if lyrics of a song include one or more similar words such as "happy", "delighted", and "joyful", the lyrics may express joy, and a style of the song may be related to joy.

It may be understood that, in this embodiment of this application, the semantic feature may be determined by using a predefined rule. For example, a word "love" or "hate" is classified as an emotional word, and the word "love" may be further classified as an emotion that represents the feeling of liking, and the word "hate" may be classified as an emotion that represents a feeling of dislike.

In some embodiments, the playlist information of the first playlist further includes the song name and the artist of the song, and the feature extraction module may further extract the text feature of the first playlist based on the song name and the artist of the song.

The song name can also reflect the style of the song, and by extracting a text feature of the song name, a meaning expressed by the song name of the song can be determined, and then the style of the song can be determined.

For example, if the song name is "friend", "friendship" and another similar word, lyrics may express friendship, and the style of the song is related to friendship.

In this embodiment of this application, the server may determine a correspondence between the song name and the style of the song according to a preset rule, so that the style of the song can be determined after the text feature of the song name is extracted.

The artist of the song can also reflect the style of the song. Generally speaking, for an artist, a style of a song the artist creates is fixed, so the style of the song can also be reflected through the artist of the song. For example, an artist #1 writes songs in a style of folk, and an artist #2 writes songs in the style of rock. In conclusion, the text feature extracted by using the artist of the song may be combined with the text feature extracted by using the lyrics described above, to reflect the style of the song more truly.

The feature extraction module may extract not only the text feature, but also the audio feature. For example, the audio feature includes but is not limited to an energy feature, a time domain feature, a frequency domain feature, a musical feature, and a perception feature. An audio characteristic of the song may be determined by extracting the audio feature, and the audio characteristic may be related to the style of the song, so that the style of the song may be determined based on the audio feature. For example, songs of different styles have different audio features. For example, songs whose frequency features include a spectral centroid and whose song styles are a metal style and a blues style are used as an example. Two songs that are of the metal style and the blues style are of a same time length. The spectral centroid of the metal style song is close to an end part of a spectrum, and the spectral centroid the blues style song is close to a middle position of the spectrum.

It should be noted that a method for extracting the text feature and the audio feature is not limited in this embodiment of this application. For example, the feature extraction module may extract the text feature by using a vector space model (vector space model, VSM), a genetic algorithm (genetic algorithm, GA), a principal component analysis (principal component analysis, PCA) method, or the like and extract the audio feature of the playlist by using a Mel-frequency cepstral coefficient (Mel-frequency cepstral coefficient, MFCC) feature extraction method.

In some embodiments, if the songs in the first playlist do not include the lyric information, the feature extraction module may obtain lyrics of the songs by using a speech recognition technology, and then extract the text feature.

In some embodiments, the playlist information of the first playlist further includes cover information, and the feature extraction module may further extract an image feature based on the cover information.

Both audios and the lyrics of the songs in the playlist and the cover of the playlist can reflect a style of the playlist. The feature extraction module may extract the image feature based on the cover of the playlist. The cover may be a cover added when the user creates the playlist. The image feature includes but is not limited to a color feature, a texture feature, a shape feature, a spatial relationship feature, and the like.

For example, the color feature of the cover may reflect the style of the playlist. For example, if a color of the cover is blue, the style of the playlist may be melancholy, and if the color of the cover is red, the style of the playlist may be enthusiastic.

It should be noted that a method for extracting the image is not limited in embodiments of this application. For example, a method for extracting the color feature may be a color histogram, a color set, a color moment, a color aggregation vector, a color correlogram, or the like. A method for extracting the texture feature may be a geometric method, a model method, a signal processing method, or the like. A method for extracting the shape feature may be Fourier transform, a finite element method, or the like. A method for extracting the spatial relationship feature may be segmenting an image to obtain objects or color regions included in the image. Then, an image feature is extracted based on these regions and an index is created. Alternatively, the image is evenly divided into a plurality of sub-images, an image feature of each sub-image is extracted, and an index is created.

S604: The feature extraction module sends the feature of the first playlist to the generation module.

Correspondingly, a text generation module receives the feature of the first playlist sent by the feature extraction module.

In some embodiments, the feature extraction module sends the text feature and/or the audio feature of the first playlist to the text generation module.

In some embodiments, the feature extraction module sends the text feature, the audio feature, and the image feature of the first playlist to the text generation module.

S605: The generation module generates the name and the description of the first playlist based on the feature of the first playlist.

In some embodiments, the feature of the playlist includes the text feature and the audio feature. The generation module generates the name and the description of the playlist based on the text feature and the audio feature.

In some embodiments, the feature of the playlist includes the text feature and the audio feature. The generation module generates the name, the description, and the cover of the playlist based on the text feature and the audio feature.

When generating the cover, the generation module may directly generate the cover, or the server stores a plurality of covers, where the plurality of covers may correspond to different playlist styles, and the generation module may determine the styles of the songs in the playlist based on the feature of the first playlist. Further, one or more covers may be selected from the plurality of covers as the cover of the first playlist.

In some embodiments, the feature of the playlist includes the text feature and the audio feature. The generation module generates a plurality of covers based on the text feature and the audio feature, and the plurality of covers include corresponding playlist names and descriptions. The plurality of covers include a first cover and a second cover, the first cover corresponds to a first playlist name and a first playlist description, and the second cover corresponds to a second playlist name and a second playlist description. The first playlist name and the second playlist name may be the same or may be different. The corresponding playlist names and descriptions may be the same or may be different.

In some embodiments, the feature of the playlist includes the text feature, the image feature, and the audio feature. The generation module generates the name and the description of the playlist based on the text feature, the image feature, and the audio feature.

The generation module includes a trained model, and the generation module may generate the name and the description of the playlist, or generate the name, the description, and the cover of the playlist based on the received feature of the first playlist.

In some embodiments, an input of the trained model may be the text feature and the audio feature, and an output of the trained model may be the name and the description of the playlist.

In some embodiments, an input of the trained model may be the text feature and the audio feature, and an output of the trained model may be the name, the description, and the cover of the playlist.

In some embodiments, an input of the trained model may be the text feature, the audio feature, and the image feature, and an output of the trained model may be the name and the description of the playlist.

During model training, a large amount of training data may be collected. The training data includes the feature of the playlist, and the name and the description of the playlist corresponding to the feature of the playlist, where the name and description of the playlist corresponding to the feature of the playlist may be manually pre-edited or may be generated by using an artificial intelligence algorithm.

After the training data is collected, training may be performed to obtain a target model. The target model may also be referred to as a target rule.

The foregoing target model can be used to implement the playlist generation method in this embodiment of this application. The target model in this embodiment of this application may be a neural network. Specifically, the neural network constructed in this embodiment of this application may be a convolutional neural network (convolutional neural network, CNN), a deep convolutional neural network (deep convolutional neural network, DCNN), a recurrent neural network (recurrent neural network, RNN), and the like.

In some embodiments, the playlist name generated by using the feature of the playlist may reflect the styles of the songs in the playlist. For example, if the playlist name is "folk song playlist", the songs in the playlist are folk songs.

In some embodiments, the playlist name generated by using the feature of the playlist may also reflect use of the playlist. For example, if it is determined, based on the feature of the playlist, that the songs in the playlist are rock songs and are suitable for listening during workout, the name of the playlist may be a "workout playlist". For another example, if it is determined, based on the audio feature of the playlist, that the songs in the playlist are soothing songs, the name of the playlist may be a "sleep-aiding playlist".

S606: The generation module sends the name and the description of the first playlist to the electronic device.

Correspondingly, the electronic device receives the name and the description that are of the first playlist and that are sent by the generation module.

In some embodiments, the generation module may further send the cover of the playlist to the electronic device.

S607: The electronic device displays the name and the description of the first playlist.

After receiving the name and the description of the playlist, the electronic device may display the name and the description of the playlist.

In some embodiments, if the generation module further sends the cover of the playlist to the electronic device, the electronic device may further display the cover of the playlist.

In some embodiments, the generation module may further send the plurality of covers of the playlist to the electronic device, where the plurality of covers include the first cover and the second cover, the first cover corresponds to the first playlist name and the first playlist description, and the second cover corresponds to the second playlist name and the second playlist description. The first playlist name and the second playlist name may be the same or may be different, and the first playlist description and the second playlist description may be the same or may be different. Before displaying the cover of the first playlist, the electronic device may further display a first interface. The first interface includes the first cover and the second cover. The electronic device may display the first cover, the first playlist name, and the first playlist description in response to a detected operation of selecting on the first interface by the user.

In some embodiments, the method further includes:

The electronic device detects an operation of modifying the first playlist to a second playlist by the user, and sends second request information to the data obtaining module. The data obtaining module obtains playlist information of the second playlist, and sends the playlist information of the second playlist to the feature extraction module. The feature extraction module extracts a playlist feature of the second playlist based on the playlist information of the second playlist, and sends the feature of the second playlist to the generation module. The generation module generates a name and a description of the second playlist based on the playlist feature of the second playlist, and may further generate a cover of the second playlist.

For example, as shown in FIG. 4(d) and FIG. 4(h), the playlist already includes the opera song #1 and the opera song #2, and the user may continue to add the archaic song #1. The data obtaining module may obtain audio information and lyric information of the opera song #1, the opera song #2, and the archaic song #1 from the modified playlist, to finally generate the name and the description of the playlist based on songs in the modified playlist.

In an embodiment of this application, the styles of the songs in the playlist can be determined by obtaining the text feature and the audio feature of the songs in the playlist, and then the name of the playlist and the description of the playlist can be automatically generated. The user does not need to manually edit and write, thereby reducing operation steps for the user.

In the foregoing embodiments, the electronic device may send the playlist information to the server when creating or modifying the playlist. However, embodiments of this application are not limited thereto. In some other embodiments, the server may periodically obtain the playlist information in the electronic device, to generate the name, the description, and the cover of the playlist based on the playlist information.

In some embodiments, FIG. 7 is a schematic interactive diagram of a playlist generation method according to an embodiment of this application. A server further includes a difference detection module, and the method further includes the following steps.

S700: An electronic device sends second request information to a data obtaining module.

When detecting that a user modifies a first playlist to a second playlist, the electronic device may send the second request information to the data obtaining module of the server, where the second request information is used to request a name and a description of the second playlist.

S701: The data obtaining module obtains playlist information of the second playlist.

In some embodiments, the playlist information of the second playlist includes lyric information and/or audio information of a song in the second playlist, and further includes an identifier of the second playlist. In these embodiments of this application, each playlist corresponds to one identifier, and identifiers of playlists are different.

In some embodiments, the information of the second playlist includes lyric information, audio information, and cover information of the song in the second playlist, and further includes the identifier of the second playlist.

It should be understood that for detailed descriptions of step S700 and step S701, refer to the descriptions of step S600 and step S601. For brevity, details are not described herein again.

S702: The data obtaining module sends the playlist information of the second playlist to the difference detection module.

Correspondingly, the difference detection module receives the playlist information that is of the second playlist and that is sent by the data obtaining module.

After obtaining the playlist information of the second playlist, the data obtaining module may send the playlist information of the second playlist to the difference detection module.

S703: The difference detection module detects whether the second playlist is a modified playlist.

In some embodiments, the difference detection module may detect whether the second playlist is the modified playlist. If the difference detection module determines that the second playlist is the modified playlist, step S704 is performed.

The difference detection module may determine, based on the following possible implementations, whether the second playlist is the modified playlist.

In a possible implementation, each playlist corresponds to one identifier. The server stores the identifier and the playlist information of the playlist of the electronic device, or stores an identifier and playlist information of a playlist of an account logged in to the electronic device. It is assumed that the second playlist is the modified playlist. The identifier of the second playlist is B. The difference detection module may determine, based on the identifier of the second playlist, the playlist stored in the server, and then compare the playlist information of the second playlist with the playlist information stored in the server. If it is determined that there is a difference between the two playlists, it may be determined that the second playlist is the modified playlist.

In a possible implementation, a flag bit may indicate a status of a playlist. For example, 00 may indicate that the playlist is a newly created playlist, 01 may indicate that the playlist is a modified playlist, and 10 may indicate that the playlist is an unmodified playlist. The electronic device may create a new playlist or modify an original playlist based on an operation of the user, and the electronic device may mark the status of the playlist by using the flag bit. When the data obtaining module obtains the playlist information of the second playlist, the playlist information of the second playlist further includes a flag bit of the second playlist, and the difference detection module may determine, based on the flag bit of the second playlist, whether the second playlist is the modified playlist.

In some embodiments, the difference detection module may detect whether a change difference degree of the playlist information of the second playlist exceeds a first threshold. If the difference detection module determines that the change difference degree of the playlist information of the second playlist exceeds the first threshold, step S704 is performed.

In an embodiment of this application, the change difference degree of the playlist information may be determined based on the following several possible implementations.

In a possible implementation, the difference detection module may determine the change difference degree of the playlist information of the second playlist based on formula (1).

$$\delta = n_{add} + n_{del} \qquad (1)$$

$n_{add}$ indicates a quantity of added songs, and $n_{del}$ indicates a quantity of deleted songs. As shown in formula (1), the difference detection module may determine the quantity of added songs and the quantity of deleted songs based on the playlist information of the second playlist and the playlist information that is stored in the server and that is of the second playlist before modification, that is, the playlist information of the first playlist. If it is determined that a sum of the added songs and the deleted songs exceeds the first threshold, step S704 is performed.

In a possible implementation, the difference detection module may determine the change difference degree of the playlist information of the second playlist based on formula (2).

$$\delta = \frac{n_{add} + n_{del}}{n} \qquad (2)$$

$n_{add}$ indicates the quantity of added songs, $n_{del}$ indicates the quantity of deleted songs, n is a quantity of songs in the second playlist before modification, that is, a quantity of playlists in the first playlist. As shown in formula (2), the difference detection module may determine the added songs and the deleted playlist based on the playlist information of the second playlist and the playlist information that is stored in the server and that is of the second playlist before modification, that is, the playlist information of the first playlist. If it is determined that a ratio of the sum of the added songs and the deleted songs to the quantity of songs in the second playlist before modification exceeds the first threshold, step S704 is performed.

In a possible implementation, the difference detection module may determine the change difference degree of the playlist information of the second playlist based on formula (3).

$$\delta = \mathrm{Dis}(V_{new}, V_{orig}) \qquad (3)$$

$V_{new}$ is a feature vector of the second playlist, $V_{orig}$ is a feature vector of the second playlist before modification, that is, a feature vector of the first playlist, and $Dis_{()}$ is a measurement function of a distance between the vectors. As shown in formula (3), the difference detection module may determine the feature vector of the second playlist based on the second playlist information, and determine the feature vector of the second playlist before modification based on the playlist information that is stored in the server and that is of the second playlist before modification. The distance between the two feature vectors is calculated, and if it is determined that the distance between the two feature vectors exceeds the first threshold, step S704 is performed.

S704: The difference detection module sends the playlist information of the second playlist to the feature extraction module.

Correspondingly, the feature extraction module receives the playlist information that is of the second playlist and that is sent by the difference detection module.

Alternatively, in some embodiments, step S704 may be replaced with: The data obtaining detection module sends the playlist information of the second playlist to the feature extraction module.

In a possible implementation, after obtaining the playlist information of the second playlist, the data obtaining module may send the playlist information of the second playlist to the feature extraction module.

In a possible implementation, when determining that the second playlist is the modified playlist, the difference detection module may communicate with the data obtaining module to indicate the data obtaining module to send the playlist information of the second playlist to the feature extraction module.

S705: The feature extraction module extracts a feature of the second playlist based on the playlist information of the second playlist.

S706: The feature extraction module sends the feature of the second playlist to a generation module.

S707: The generation module generates the name and the description of the second playlist based on the feature of the second playlist.

S708: The generation module sends the name and the description of the second playlist to the electronic device.

S709: The electronic device displays the name and the description of the second playlist.

It should be understood that for descriptions of steps S705 to S709, refer to the foregoing descriptions of steps S603 to S607. For brevity, details are not described herein again.

It may be understood that the name of the second playlist may be different from the name of the first playlist, and the description of the second playlist may be different from the description of the first playlist.

In some embodiments, the generation module generates a cover of the second playlist based on the feature of the second playlist, and sends the cover of the second playlist to the electronic device, so that the electronic device displays the cover of the second playlist, where the cover of the second playlist may be different from the cover of the first playlist.

In some embodiments, the electronic device may share the first playlist with a second user, where the first playlist is created by a first user, and the second user may modify the first playlist to a third playlist. In the server, the data obtaining module may obtain playlist information of the third playlist, the feature extraction module extracts a feature of the third playlist based on the information of the third playlist, and the generation module generates a name and a description of the third playlist based on a playlist feature of the third playlist, and sends the name and the description of the third playlist to the electronic device (the electronic device includes an electronic device of the first user and an electronic device of the second user), where the name of the third playlist may be different from the name of the first playlist, and the description of the third playlist may be different from the description of the first playlist.

In some embodiments, the generation module may further generate a cover of the third playlist based on the feature of the third playlist, and send the cover of the third playlist to the electronic device. The electronic device displays the cover of the third playlist, where the cover of the third playlist may be different from the cover of the first playlist.

In an embodiment of this application, styles of songs in the playlist can be determined by obtaining a text feature and an audio feature of the songs in the playlist, and then the name of the playlist and the description of the playlist can be automatically generated. The user does not need to manually edit and write, thereby reducing operation steps for the user.

In the foregoing embodiments, the server may obtain the playlist information of the electronic device, and automatically generate the name and the description of the playlist based on the playlist information. However, embodiments of this application are not limited thereto. Alternatively, the electronic device may automatically generate the name and the description of the playlist based on the playlist information.

FIG. 8 is a schematic flowchart of a playlist generation method according to an embodiment of this application. As shown in FIG. 8, the method is performed by an electronic device, and the method includes the following steps.

S801: The electronic device obtains playlist information of a first playlist.

In some embodiments, the electronic device may obtain playlist information of a playlist, where the playlist includes the first playlist, and the first playlist may be a newly created playlist or a modified playlist.

In some other embodiments, a user may create or modify a playlist. When detecting that the user creates the playlist and adds a song or modifies a song in the playlist, the electronic device may obtain the playlist information of the first playlist. The first playlist is the playlist newly created by the user or the playlist modified by the user.

In some embodiments, the playlist information of the first playlist includes lyric information and/or audio information.

In some other embodiments, the playlist information of the first playlist includes lyric information and/or audio information, and further includes cover information.

S802: The electronic device determines a name and a description of the playlist based on the playlist information of the first playlist.

In some embodiments, the electronic device may include a feature extraction module and a generation module, the first playlist information includes the lyric information and/or the audio information, and the feature extraction module may extract a feature of the first playlist based on the playlist information of the first playlist. The feature of the first playlist includes a text feature/or an audio feature, and then the generation module may determine the name and the description of the playlist based on the feature of the first playlist.

In some embodiments, the electronic device may include a feature extraction module and a generation module, the first playlist information includes the lyric information and/or the audio information, and the feature extraction module may extract a feature of the first playlist based on the playlist information of the first playlist. The feature of the first playlist includes a text feature/or an audio feature, and then the generation module may determine the name, the description, and a cover of the playlist based on the feature of the first playlist.

In some embodiments, the electronic device may include a feature extraction module and a generation module, the first playlist information includes the lyric information and/or the audio information, and the feature extraction module may extract a feature of the first playlist based on the playlist information of the first playlist. The feature of the first playlist includes a text feature/or an audio feature. Then, the generation module may determine a plurality of covers based on the feature of the first playlist, where the plurality of covers include a first cover and a second cover, the first cover corresponds to a first playlist name and a first playlist description, and the second cover corresponds to a second playlist name and a second playlist description. The first playlist name and the second playlist name may be the same or may be different, and the first playlist description and the second playlist description may be the same or may be different.

In some embodiments, the electronic device may include a feature extraction module and a generation module, the first playlist information includes the lyric information and/or the audio information and further includes cover information, and the feature extraction module may extract a feature of the first playlist based on the playlist information of the first playlist. The feature of the first playlist includes a text feature/or an audio feature and further includes an image feature, and then the generation module may determine the name and the description of the playlist based on the feature of the first playlist.

It should be understood that for descriptions of extracting the feature of the first playlist by the electronic device and determining the name and the description of the playlist based on the feature of the first playlist, refer to the foregoing descriptions. For brevity, details are not described herein again.

S803: The electronic device displays the name and the description of the first playlist.

After determining the name and the description of the first playlist, the electronic device may display the name and the description of the first playlist.

In some embodiments, the method further includes: The electronic device displays a cover of the first playlist.

In some embodiments, if the electronic device determines the plurality of covers based on the playlist information of the first playlist, the plurality of covers include the first cover and the second cover, the first cover corresponds to the first playlist name and the first playlist description, and the second cover corresponds to the second playlist name and the second playlist description. The first playlist name and the second playlist name may be the same or may be different, and the first playlist description and the second playlist description may be the same or may be different. The method further includes: displaying the first cover, the first playlist name, and the first playlist description in response to a detected operation of selecting the first cover by the user.

In an embodiment of this application, styles of songs in the playlist can be determined by obtaining the text feature and the audio feature of the songs in the playlist, and then the name of the playlist and the description of the playlist can be automatically generated. The user does not need to manually edit and write, thereby reducing operation steps for the user.

In some embodiments, in step S802, that the electronic device determines a name and a description of the playlist based on the playlist information of the first playlist includes:

If the electronic device determines that the first playlist is the newly created playlist or the first playlist is the modified playlist, the electronic device determines the name and the description of the playlist based on the song information of the first playlist.

When detecting that the user creates the playlist and adds a song or modifies a song in the playlist, the electronic device may obtain the playlist information of the first playlist, and then determine the name and the description of the playlist based on the playlist information of the first playlist.

In some embodiments, in step S802, that the electronic device determines a name and a description of the playlist based on the playlist information of the first playlist includes:

If the electronic device determines that the first playlist is the newly created playlist or the first playlist is the modified playlist, and a change difference degree of the playlist information exceeds a first threshold, the electronic device determines the name and the description of the playlist based on the song information of the first playlist.

The electronic device may include a difference detection module. The difference detection module may detect the change difference degree of the playlist information. When the change difference degree exceeds the first threshold, the electronic device determines the name and the description of the playlist based on the song information of the first playlist.

The foregoing mainly describes the playlist generation method provided in embodiments of this application from a perspective of the electronic device and the server. It may be understood that, to implement the foregoing functions, the electronic device and the server include corresponding hardware structures and/or corresponding software modules for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or computer software driving hardware depends on a specific application and a design constraint condition of the technical solution. A person skilled in the art may use different methods to implement the described functions for each particular application, but it should not be considered that the implementation goes beyond the scope of this application.

In embodiments of this application, the electronic device and a processor in the server may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that the module division in embodiments of this application is an example, and is merely logical function division. In actual implementation, there may be another division manner.

When each function module is obtained through division based on each corresponding function, FIG. 9 is a schematic composition diagram of a server according to an embodiment of this application. As shown in FIG. 9, a server 900 includes a data obtaining module 910, a feature extraction module 920, and a generation module 930.

The data obtaining module 910 is configured to obtain playlist information of a first playlist of an electronic device.

In some embodiments, the first playlist may be a newly created playlist.

In some embodiments, the playlist information of the first playlist includes lyric information and/or audio information.

In some other embodiments, the playlist information of the first playlist includes lyric information and/or audio information, and further includes cover information.

The feature extraction module 920 is configured to extract a feature of the first playlist based on the playlist information of the first playlist.

In some embodiments, the feature extraction module 920 is specifically configured to extract a text feature and/or an audio feature of the first playlist based on the playlist information of the first playlist.

In some embodiments, the feature extraction module 920 is specifically configured to extract a text feature and/or an audio feature and an image feature of the first playlist based on the playlist information of the first playlist.

The generation module 930 is configured to generate a name and a description of the playlist based on the feature of the first playlist.

In some embodiments, the generation module 930 is specifically configured to generate the name and the description of the playlist based on the text feature and/or the audio feature of the first playlist.

In some embodiments, the generation module 930 is specifically configured to generate the name and the description of the playlist based on the text feature and/or the audio feature and the image feature of the first playlist.

In some embodiments, the generation module 930 is specifically configured to generate the name, the description, and a cover of the playlist based on the text feature and/or the audio feature of the first playlist.

In some embodiments, the generation module 930 is specifically configured to generate a plurality of covers based on the text feature and/or the audio feature of the first playlist, where the plurality of covers include a first cover and a second cover, the first cover is associated with a first playlist name and a first playlist description, and the second cover is associated with a second playlist name and a second playlist description. The first playlist name and the second playlist name may be the same or may be different, and the first playlist description and the second playlist description may be the same or may be different.

The generation module 930 is further configured to send the name and the description of the first playlist to the electronic device.

The data obtaining module 910 is further configured to obtain playlist information of a second playlist of the electronic device.

The data obtaining module 910 may obtain the playlist information of the second playlist after a user modifies the first playlist to the second playlist.

In some embodiments, the server further includes a difference detection module 940. The difference detection module 940 is configured to detect whether the playlist is a modified playlist.

The data obtaining module 910 is further configured to send the playlist information of the second playlist to the difference detection module 940.

The difference detection module 940 is configured to determine whether the second playlist is the modified playlist.

The difference detection module 940 is further configured to: if determining that the second playlist is the modified playlist, send the playlist information of the second playlist to the feature extraction module 920.

In some other embodiments, the difference detection module 940 is further configured to: if determining that the second playlist is the modified playlist and a change difference degree of the playlist information of the second playlist exceeds a first threshold, send the playlist information of the second playlist to the feature extraction module 920.

The feature extraction module 920 is further configured to extract a feature of the second playlist based on the playlist information of the second playlist.

The generation module 930 is further configured to generate a name and a description of the second playlist based on the feature of the second playlist.

When each function module is obtained through division based on each corresponding function, FIG. 10 is a schematic composition diagram of an electronic device according to an embodiment of this application. As shown in FIG. 10, an electronic device 1000 includes a data obtaining module 1010, a feature extraction module 1020, a generation module 1030, and a display module 1040.

The data obtaining module 1010 is configured to obtain playlist information of a first playlist.

In some embodiments, the data obtaining module 1010 is specifically configured to: if determining that the first playlist is a newly created playlist or the first playlist is a modified playlist, obtain the playlist information of the first playlist.

In some embodiments, the first playlist may be the newly created playlist or the modified playlist.

In some embodiments, the playlist information of the first playlist includes lyric information and/or audio information.

In some other embodiments, the playlist information of the first playlist includes lyric information and/or audio information, and further includes cover information.

The feature extraction module 1020 is configured to extract a feature of the first playlist based on the playlist information of the first playlist.

In some embodiments, the feature extraction module 1020 is specifically configured to extract a text feature and/or an audio feature of the first playlist based on the playlist information of the first playlist.

In some embodiments, the feature extraction module 1020 is specifically configured to extract a text feature and/or an audio feature and an image feature of the first playlist based on the playlist information of the first playlist.

The generation module 1030 is configured to generate a name and a description of the playlist based on the feature of the first playlist.

In some embodiments, the generation module 1030 is specifically configured to generate the name and the description of the playlist based on the text feature and/or the audio feature of the first playlist.

In some embodiments, the generation module 1030 is specifically configured to generate the name and the description of the playlist based on the text feature/or the audio feature and the image feature of the first playlist.

In some embodiments, the generation module 1030 is specifically configured to generate the name, the description, and a cover of the playlist based on the text feature and/or the audio feature of the first playlist.

In some embodiments, the generation module 1030 is specifically configured to generate a plurality of covers based on the text feature and/or the audio feature of the first playlist, where the plurality of covers include a first cover and a second cover, the first cover corresponds to a first playlist name and a first playlist description, and the second cover corresponds to a second playlist name and a second playlist description. The first playlist name and the second playlist name may be the same or may be different, and the first playlist description and the second playlist description may be the same or may be different.

The display module 1040 is configured to display the name and the description of the first playlist.

In some embodiments, the display module 1040 is further configured to display a cover of the first playlist.

In some embodiments, the electronic device further includes a difference detection module 1050. The difference detection module 1050 is configured to detect whether the first playlist is the newly created playlist or the modified playlist and whether a change difference degree of the playlist information of the first playlist exceeds a first threshold.

The feature extraction module 1020 is specifically configured to: if determining that the first playlist is the newly created playlist or the modified playlist and the change difference degree of the playlist information of the first playlist exceeds the first threshold, extract a feature of the first playlist based on the playlist information of the first playlist.

It should be noted that all related content of the steps in the foregoing method embodiments may be referenced to function descriptions of corresponding functional units. Details are not described herein again. The electronic device provided in embodiments of this application is configured to perform the foregoing service linkage method, and therefore can achieve the same effect as the foregoing effect.

An embodiment of this application further provides an electronic device, including a processor, a memory, an application, and a computer program. The foregoing components may be connected by using one or more communication buses. The one or more computer programs are stored in the memory and are configured to be executed by the one or more processors. The one or more computer programs include instructions, and the instructions may be used to enable the electronic device to perform the steps of the electronic device in the foregoing embodiments.

For example, the processor may be specifically the processor 110 shown in FIG. 1, and the memory may be specifically the internal memory 120 shown in FIG. 1 and/or an external memory connected to the electronic device.

An embodiment of this application further provides a chip. The chip includes a processor and a communication interface. The communication interface is configured to receive a signal, and transmit the signal to the processor. The processor processes the signal, so that the playlist generation method in any one of the foregoing possible implementations is performed.

This embodiment further provides a computer-readable storage medium. The computer-readable storage medium stores computer instructions. When the computer instructions run on an electronic device, the electronic device is enabled to perform the foregoing related method steps, to implement the playlist generation method in the foregoing embodiments.

This embodiment further provides a computer program product. When the computer program product runs on a computer, the computer is enabled to perform the foregoing related steps, to implement the playlist generation method in the foregoing embodiments.

According to context, the term "when..." or "after..." used in the foregoing embodiments may be interpreted as a meaning of "if..", "after... ", "in response to determining...", or "in response to detecting...". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system, comprising a server and an electronic device, wherein

the electronic device sends, first request information to the server in response to a detected operation of creating a first playlist by a user, wherein the first request information is used to request a name and a description of the first playlist;
the server obtains playlist information of the first playlist of the electronic device, wherein the first playlist comprises a first song, and the playlist information of the first playlist comprises lyric information and/or audio information of the first song;
the server determines the name and the description of the first playlist based on the playlist information of the first playlist;
the server sends the name and the description of the first playlist to the electronic device; and
the electronic device displays the name and the description of the first playlist.

**2.** The system according to claim 1, wherein the server further sends a cover of the first playlist to the electronic device, wherein the cover of the first playlist is determined based on the playlist information of the first playlist; and
the electronic device further displays the cover of the first playlist.

**3.** The system according to claim 1, wherein that the server determines the name and the description of the first playlist based on the playlist information of the first playlist comprises:
the server determines a plurality of covers, names, and descriptions based on the playlist information of the first playlist, wherein the plurality of covers comprise a first cover and a second cover, the plurality of names comprise a first playlist name and a second playlist name, the plurality of descriptions comprise a first playlist description and a second playlist description, the first cover is associated with the first playlist name and the first playlist description, and the second cover is associated with the second playlist name and the second playlist description.

**4.** The system according to claim 3, wherein the server further sends the plurality of covers to the electronic device; and
that the server sends the name and the description of the first playlist to the electronic device comprises: the server sends the plurality of names and the plurality of descriptions to the electronic device.

**5.** The system according to claim 4, wherein before the electronic device displays the name and the description of the first playlist, the electronic device further displays a first interface, wherein the first interface comprises the first cover and the second cover; and that the electronic device displays the name and the description of the first playlist comprises:
the electronic device displays, the first cover, the first playlist name, and the first playlist description in response to a detected selection operation of the user on the first interface.

**6.** The system according to claim 1, wherein the playlist information of the first playlist further comprises a cover that is uploaded by the user and that is of the first playlist.

**7.** The system according to any one of claims 1 to 6, wherein the electronic device further sends second request information to the server in response to an operation of modifying the first playlist to a second playlist by the user, wherein the second request information is used to request a name and a description of the second playlist;

the server obtains playlist information of the second playlist of the electronic device, wherein the playlist information of the second playlist comprises lyric information and/or audio information of a song in the second playlist;
the server determines the name and the description of the second playlist based on the playlist information of the second playlist;
the server sends the name and the description of the second playlist to the electronic device; and
the electronic device displays the name and the description of the second playlist, wherein the name of the second playlist is different from the name of the first playlist, and/or the description of the second playlist is different from the description of the first playlist.

**8.** The system according to claim 7, wherein the server sends a cover of the second playlist to the electronic device, and the cover of the second playlist is determined based on the playlist information of the second playlist; and
the electronic device displays the cover of the second playlist, wherein the cover of the second playlist is different from the cover of the first playlist.

**9.** The system according to claim 7 or 8, wherein the operation of modifying the first playlist to a second playlist comprises: deleting a song from the first playlist and/or adding a song to the first playlist and/or changing the cover of the first playlist.

**10.** The system according to any one of claims 7 to 9, wherein that the server determines the name and the description of the second playlist based on the playlist information of the second playlist comprises:

the server determines whether the second playlist is a modified playlist;
if determining that the second playlist is the modified playlist, the server determines a change difference degree of the song information of the second playlist; and
if the change difference degree of the playlist information of the second playlist exceeds a first threshold, the name and the description of the first playlist are determined based on the playlist information of the second playlist.

**11.** The system according to any one of claims 1 to 10, wherein the electronic device shares the first playlist with a second user;

after the first playlist is modified by the second user to a third playlist, the server obtains playlist information of the third playlist, wherein the playlist information of the third playlist comprises lyric information and/or audio information of a song in the third playlist;
the server determines a name and a description of the third playlist based on the playlist information of the third playlist;
the server sends the name and the description of the third playlist to the electronic device; and
the electronic device displays the name and the description of the third playlist, wherein the name of the third playlist is different from the name of the first playlist, and/or the description of the third playlist is different from the description of the first playlist.

**12.** A playlist generation method, wherein the method is performed by an electronic device, and the method comprises:

sending first request information to a server in response to a detected operation of creating a first playlist by a user, wherein the first request information is used to request a name and a description of the first playlist, and the first playlist comprises a first song;
obtaining the name and the description of the first playlist from the server, wherein the playlist name and the description of the first playlist are generated by the server based on playlist information of the first playlist, and the playlist information of the first playlist comprises lyric information and/or audio information of the first song; and
displaying the playlist name and the description of the first playlist.

**13.** The method according to claim 12, wherein the method further comprises:

obtaining a cover of the first playlist from the server, wherein the cover of the first playlist is determined by the server based on the playlist information of the first playlist; and
displaying the cover of the first playlist.

**14.** The method according to claim 13, wherein the receiving a cover of the first playlist comprises: receiving a plurality of covers of the first playlist, wherein the plurality of covers comprise a first cover and a second cover, the name of the first playlist comprises a first playlist name and a second playlist name, the description of the first playlist comprises a first playlist description and a second playlist description, the first cover is associated with the first playlist name and the first playlist description, and the second cover is associated with the second playlist name and the second playlist description.

**15.** The method according to claim 14, wherein before the displaying the cover of the first playlist, the method further comprises:

displaying a first interface, wherein the first interface comprises the first cover and the second cover; and
the displaying the name and the description of the first playlist comprises:
displaying the first cover, the first playlist name, and the first playlist description in response to a detected selection operation of the user on the first interface.

**16.** The method according to claim 12, wherein the playlist information of the first playlist further comprises a cover that is uploaded by the user and that is of the first playlist.

**17.** The method according to any one of claims 12 to 16, wherein the method further comprises:

sending second request information to the server in response to an operation of modifying the first playlist to a second playlist by the user, wherein the second request information is used to request a name and a description of the second playlist;
obtaining the name and the description of the second playlist from the server, wherein the name and the description of the second playlist are generated by the server based on playlist information of the second playlist, and the playlist information of the second playlist comprises lyric information and/or audio information of a song in the second playlist; and
displaying the playlist name and the description of the second playlist, wherein the name of the second playlist is different from the name of the first playlist, and/or the description of the second playlist is different from the description of the first playlist.

**18.** The method according to claim 17, wherein the method further comprises:

obtaining a cover of the second playlist from the server, wherein the cover of the second playlist is determined by the server based on the playlist information of the second playlist; and
displaying the cover of the second playlist, wherein the cover of the second playlist is different from the cover of the first playlist.

**19.** The method according to claim 15 or 16, wherein the operation of modifying the first playlist to a second playlist comprises: deleting a song from the first playlist and/or adding a song to the first playlist and/or changing the cover of the first playlist.

**20.** The method according to any one of claims 12 to 19, wherein the method further comprises:

sharing the first playlist with a second user;
after the first playlist is modified by the second user to a third playlist, obtaining a name and a description of the third playlist from the server, wherein the name and the description of the third playlist are generated by the server based on playlist information of the third playlist, and the playlist information of the third playlist comprises lyric information and/or audio information of a song in the third playlist; and
displaying the name and the description of the third playlist, wherein the name of the third playlist is different from the name of the first playlist, and/or the description of the third playlist is different from the description of the first playlist.

**21.** An electronic device, comprising one or more processors and one or more memories, wherein the one or more memories store one or more computer programs, the one or more computer programs comprise instructions, and when the instructions are executed by the one or more processors, the method according to any one of claims 12 to 20 is performed.

**22.** A chip, wherein the chip comprises a processor and a communication interface, the communication interface is configured to receive a signal, and transmit the signal to the processor, and the processor processes the signal, so that the method according to any one of claims 12 to 20 is performed.

**23.** A computer-readable storage medium, wherein the computer-readable storage medium stores computer instructions, and when the computer instructions run on a computer, the method according to any one of claims 12 to 20 is performed.

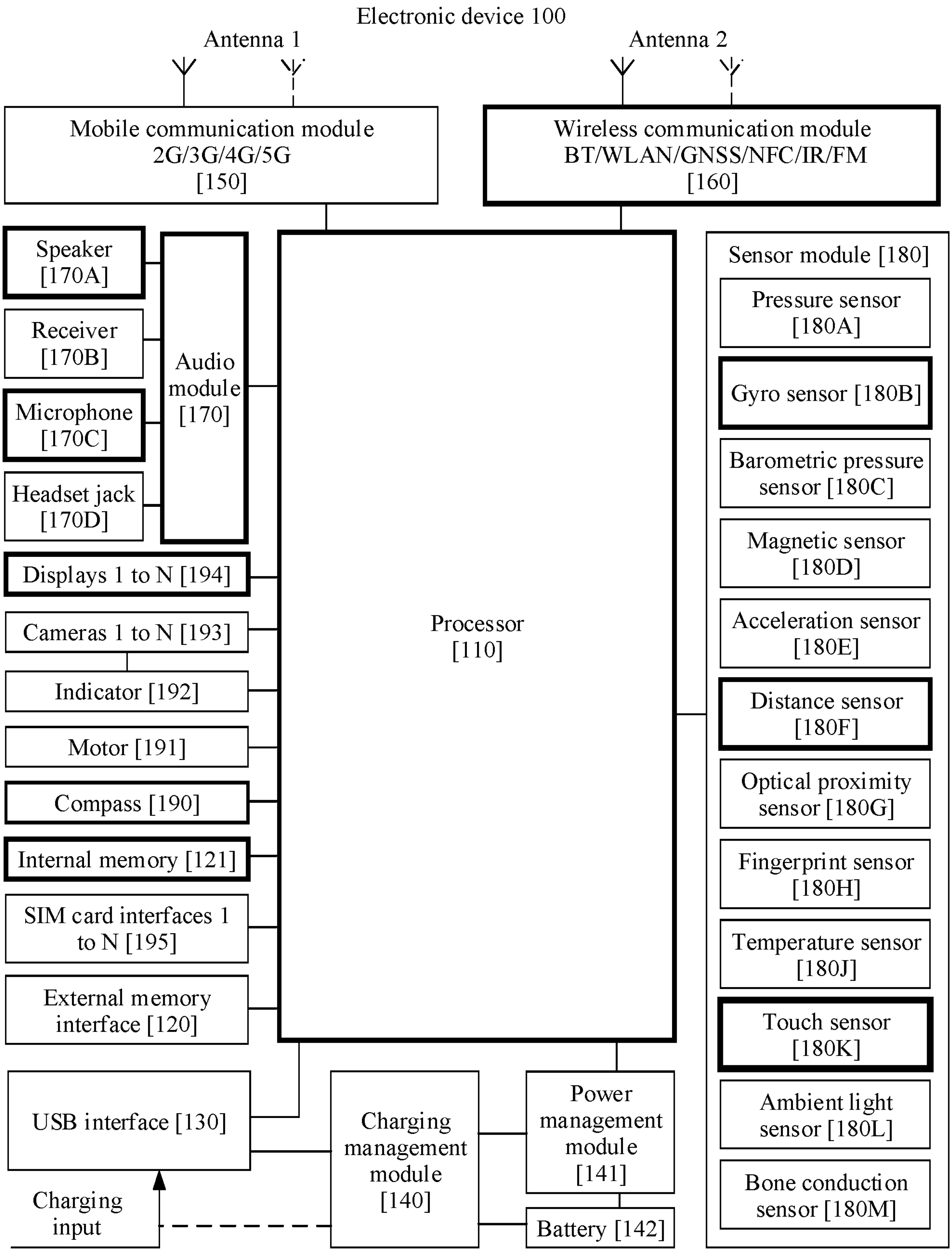
Electronic device 100
Antenna 1
Antenna 2
Mobile communication module 2G/3G/4G/5G [150]
Wireless communication module BT/WLAN/GNSS/NFC/IR/FM [160]
Speaker [170A]
Receiver [170B]
Microphone [170C]
Headset jack [170D]
Audio module [170]
Displays 1 to N [194]
Cameras 1 to N [193]
Indicator [192]
Motor [191]
Compass [190]
Internal memory [121]
SIM card interfaces 1 to N [195]
External memory interface [120]
Processor [110]
Sensor module [180]
Pressure sensor [180A]
Gyro sensor [180B]
Barometric pressure sensor [180C]
Magnetic sensor [180D]
Acceleration sensor [180E]
Distance sensor [180F]
Optical proximity sensor [180G]
Fingerprint sensor [180H]
Temperature sensor [180J]
Touch sensor [180K]
Ambient light sensor [180L]
Bone conduction sensor [180M]
USB interface [130]
Charging input
Charging management module [140]
Power management module [141]
Battery [142]

FIG. 1

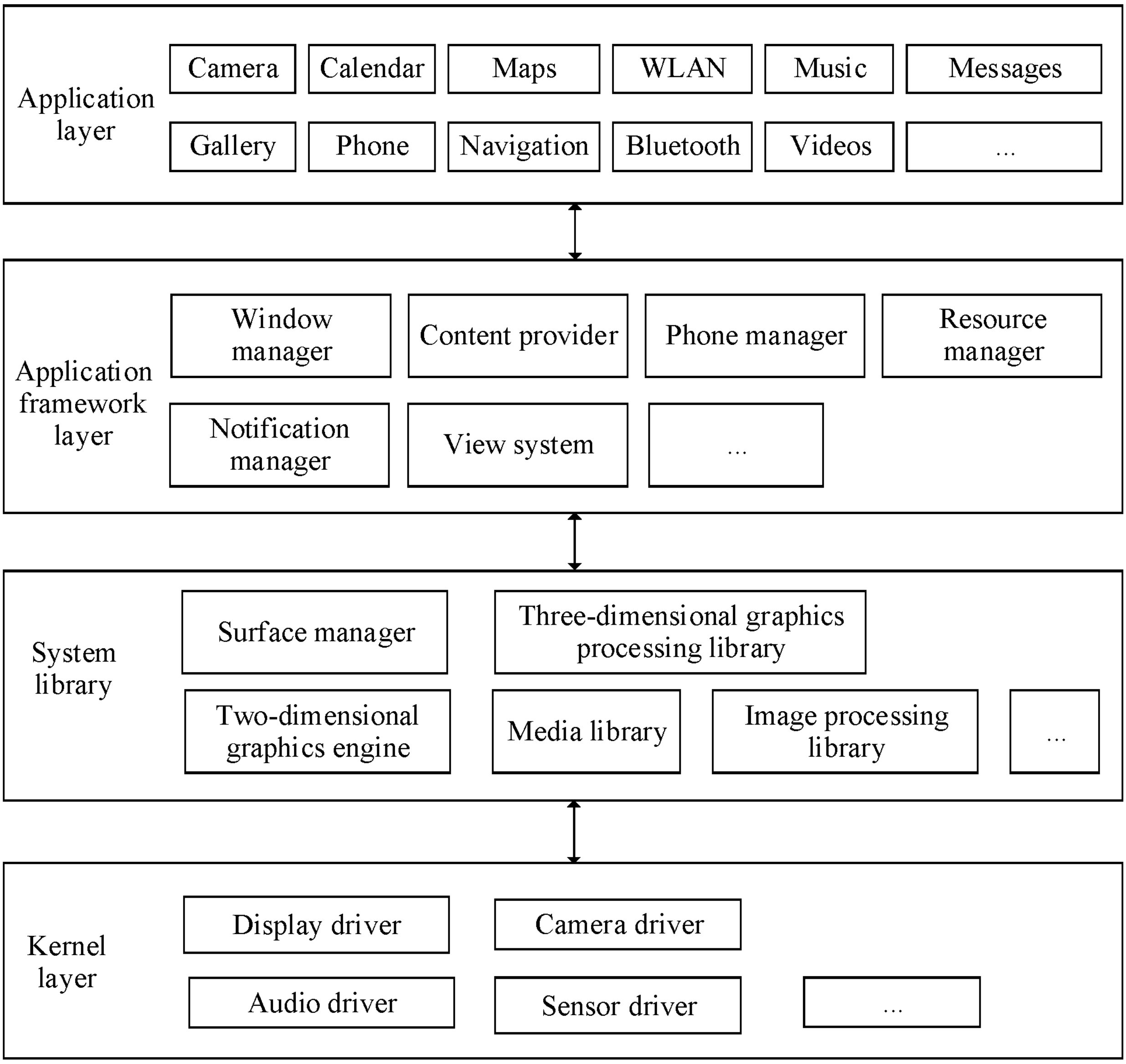
Application layer
Camera
Calendar
Maps
WLAN
Music
Messages
Gallery
Phone
Navigation
Bluetooth
Videos
...
Application framework layer
Window manager
Content provider
Phone manager
Resource manager
Notification manager
View system
...
System library
Surface manager
Three-dimensional graphics processing library
Two-dimensional graphics engine
Media library
Image processing library
...
Kernel layer
Display driver
Camera driver
Audio driver
Sensor driver
...

FIG. 2

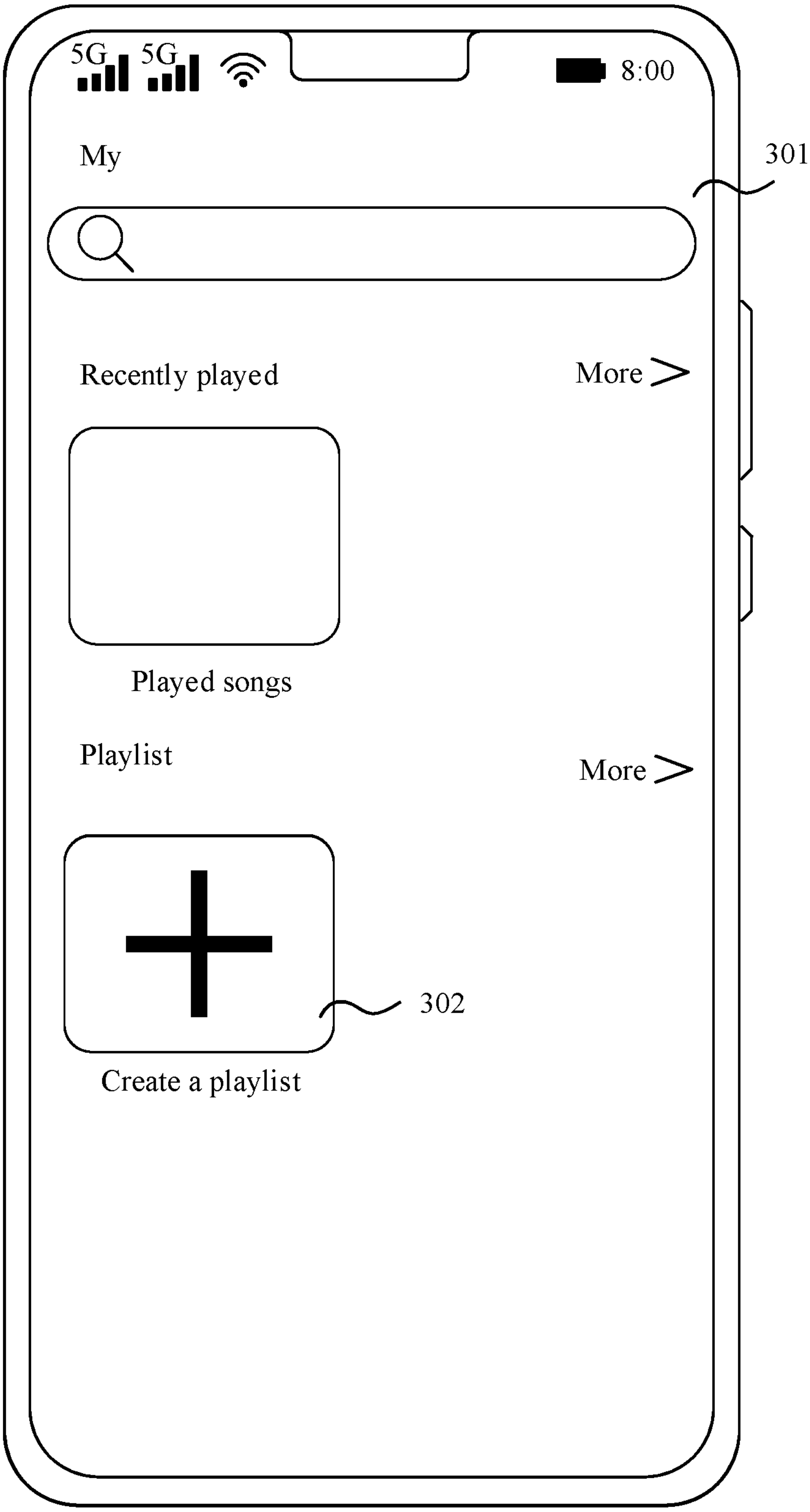
5G
5G
8:00
My
301
Recently played
More
Played songs
Playlist
More
302
Create a playlist

FIG. 3(a)

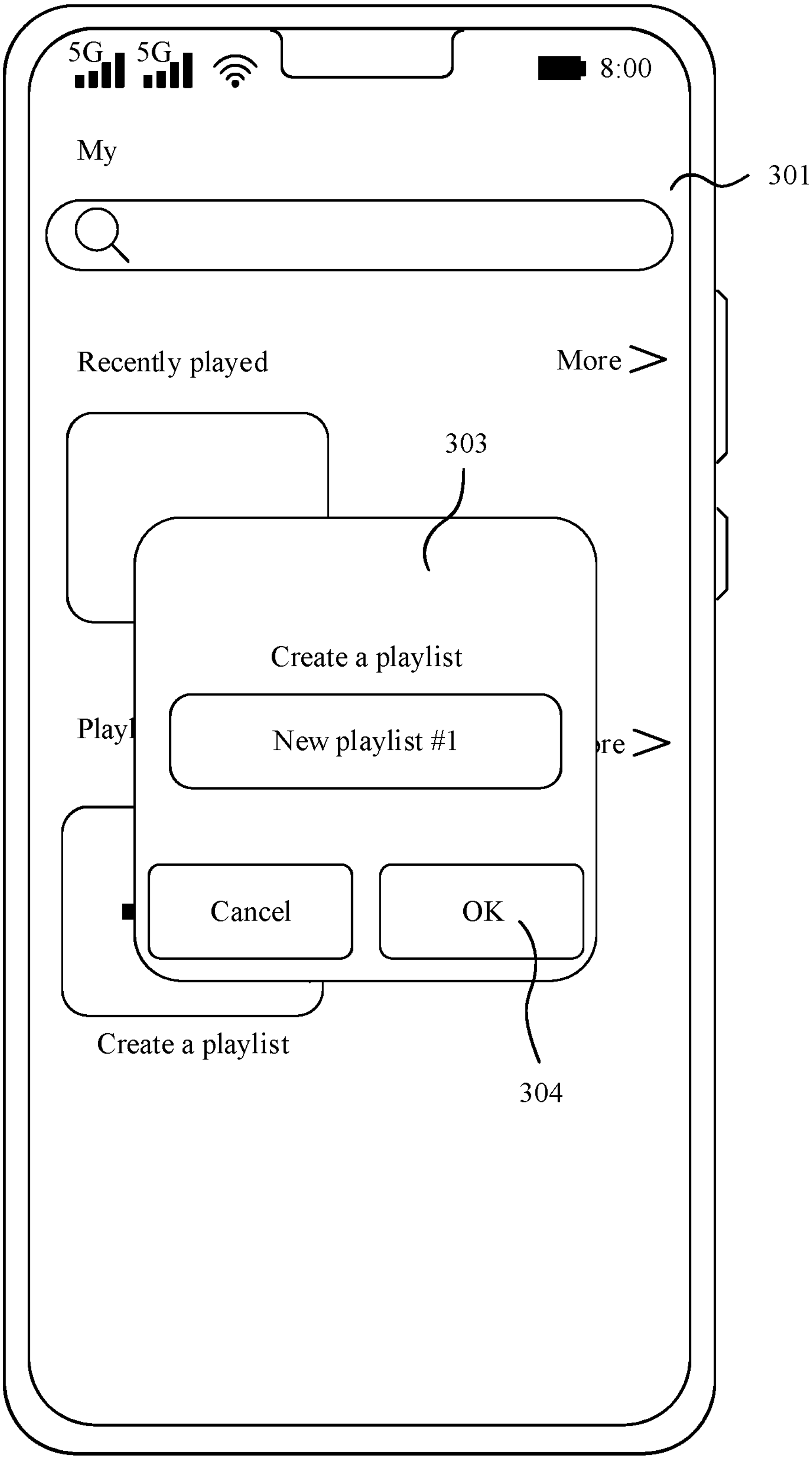
5G
5G
8:00
My
301
Recently played
More
303
Create a playlist
New playlist #1
Playl
re
Cancel
OK
Create a playlist
304

FIG. 3(b)

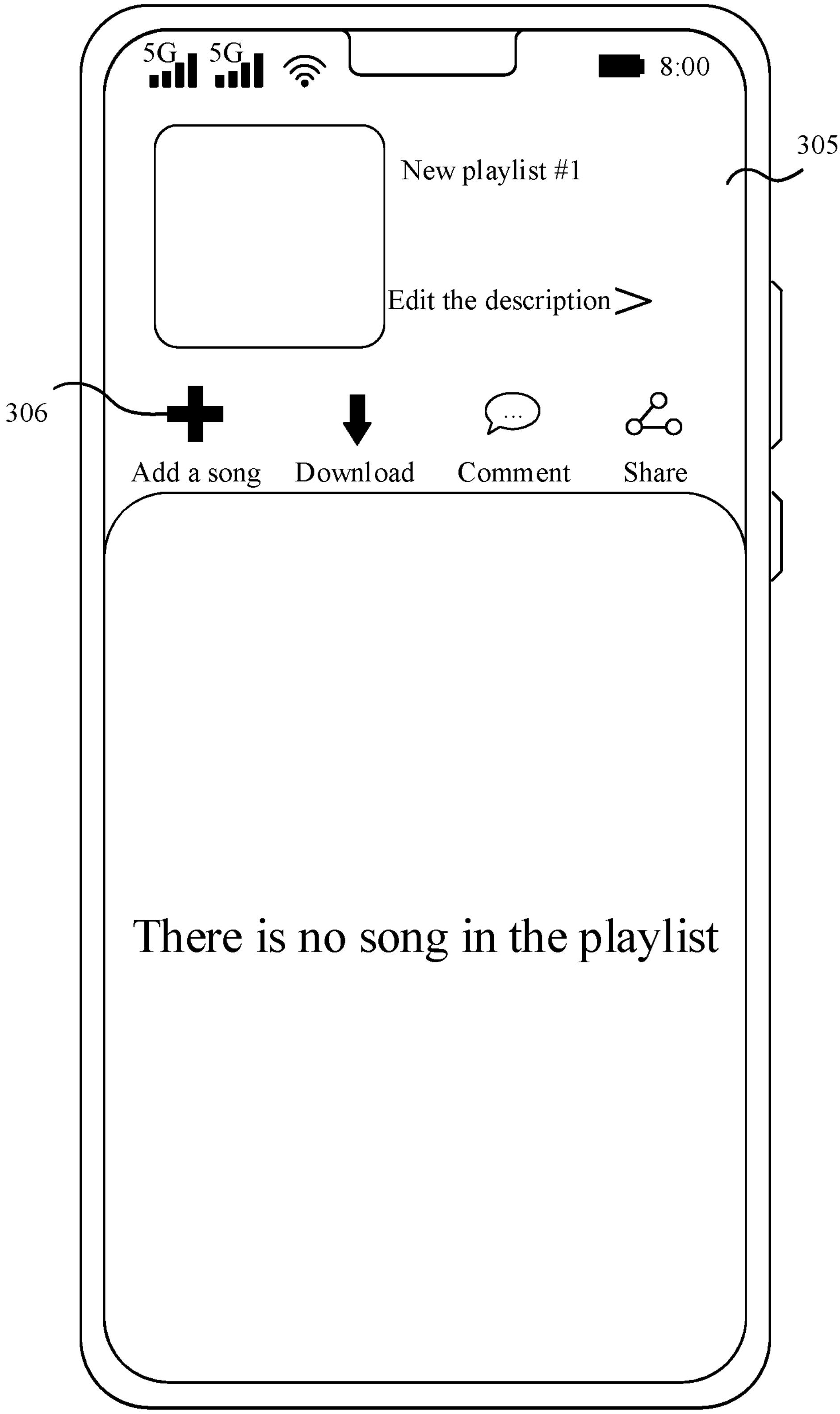
5G
5G
8:00
305
New playlist #1
Edit the description
306
Add a song
Download
Comment
Share
There is no song in the playlist

FIG. 3(c)

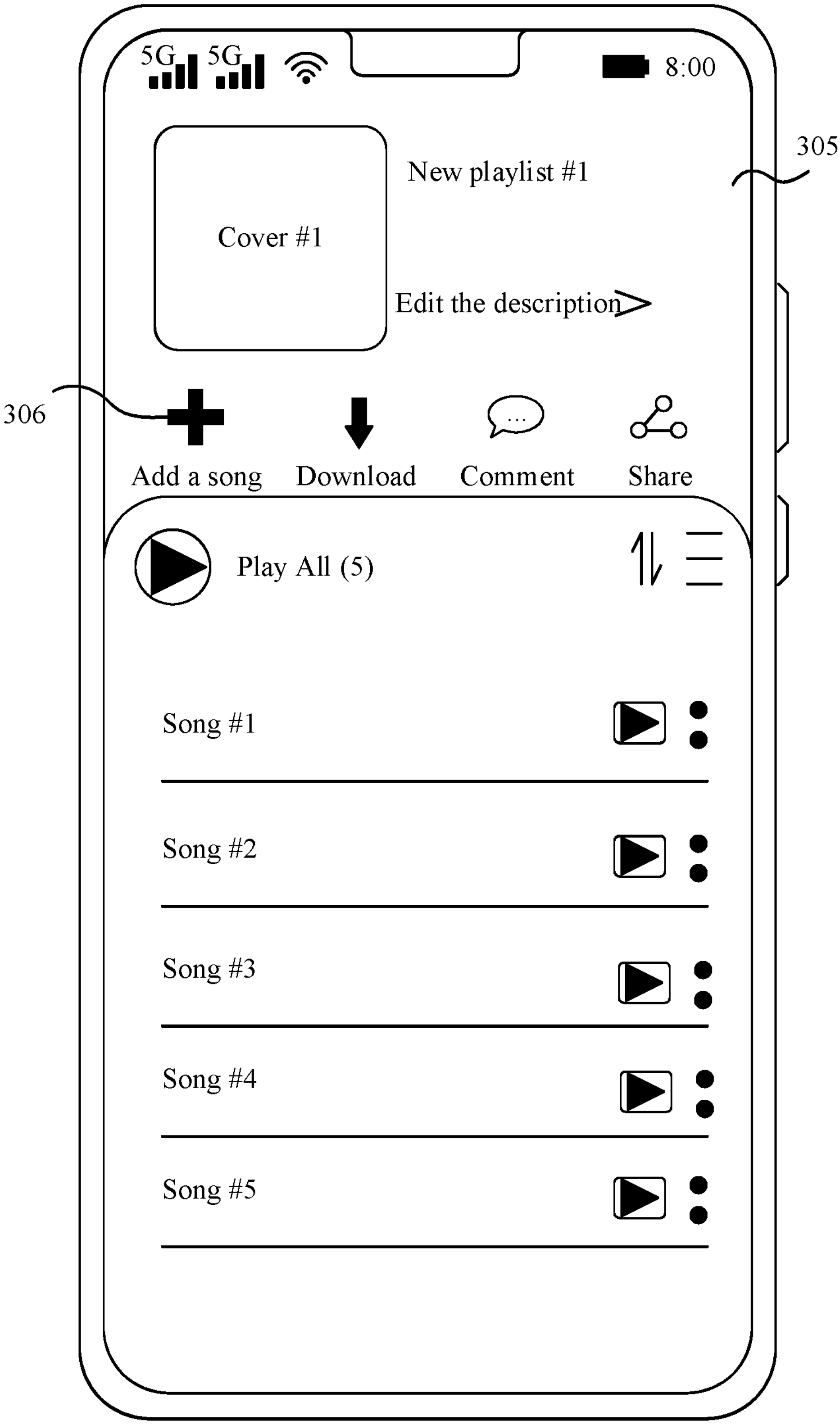
5G 5G
8:00
305
Cover #1
New playlist #1
Edit the description
306
Add a song
Download
Comment
Share
Play All (5)
Song #1
Song #2
Song #3
Song #4
Song #5

FIG. 3(d)

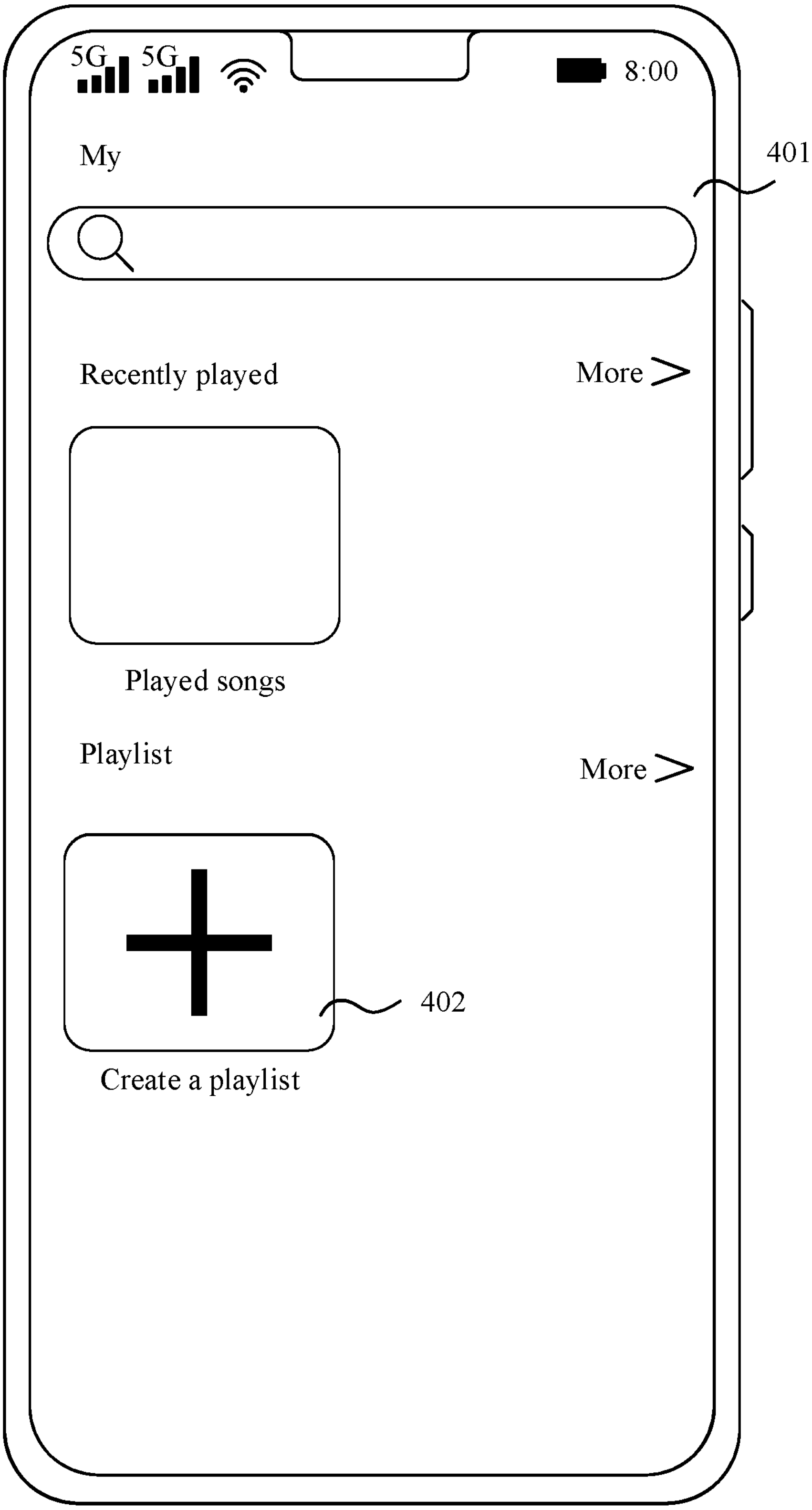
5G
5G
8:00
My
401
Recently played
More
Played songs
Playlist
More
402
Create a playlist

FIG. 4(a)

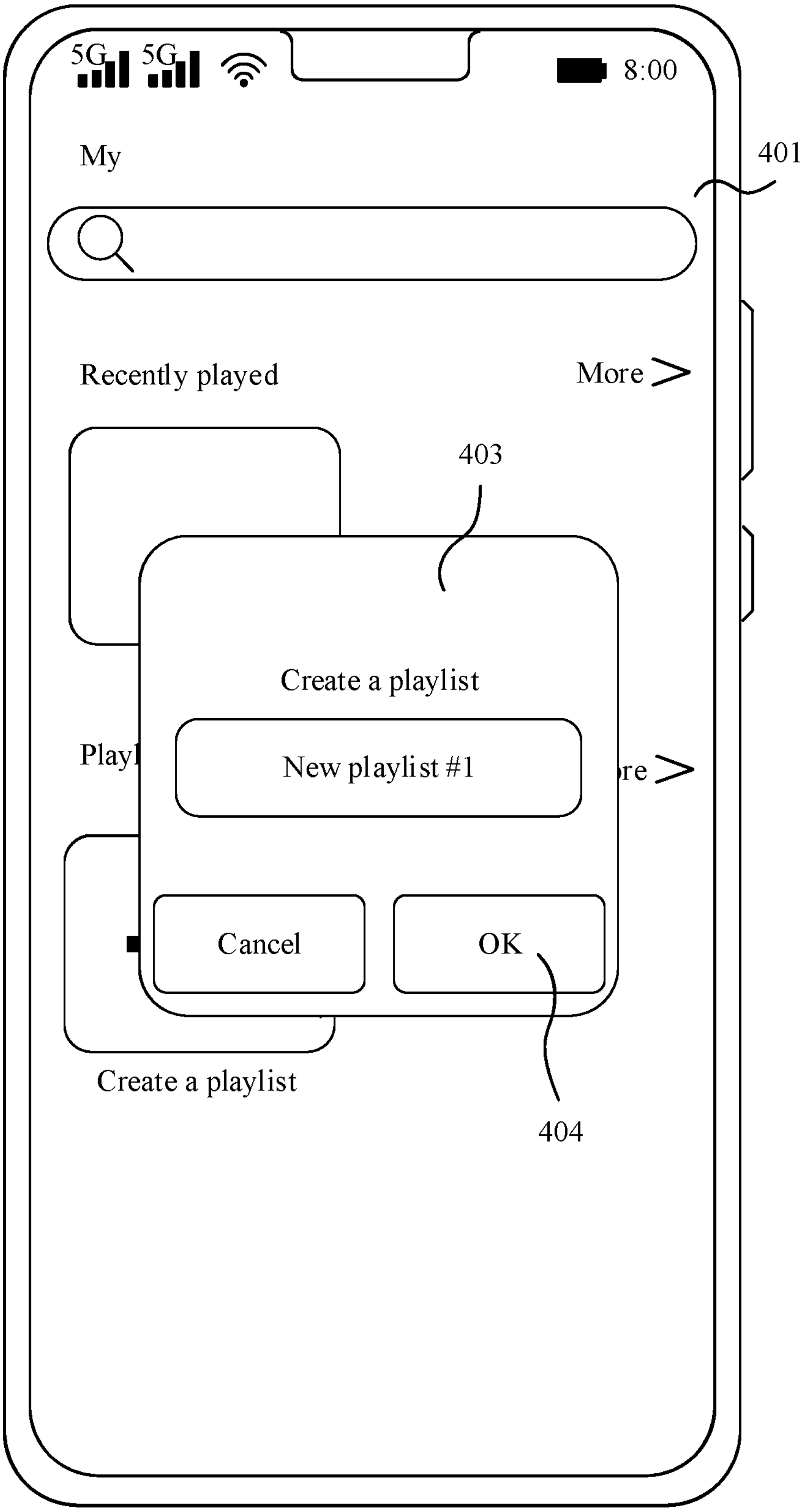
5G 5G
8:00
My
Recently played
More
Playl
re
Create a playlist
New playlist #1
Cancel
OK
Create a playlist
401
403
404

FIG. 4(b)

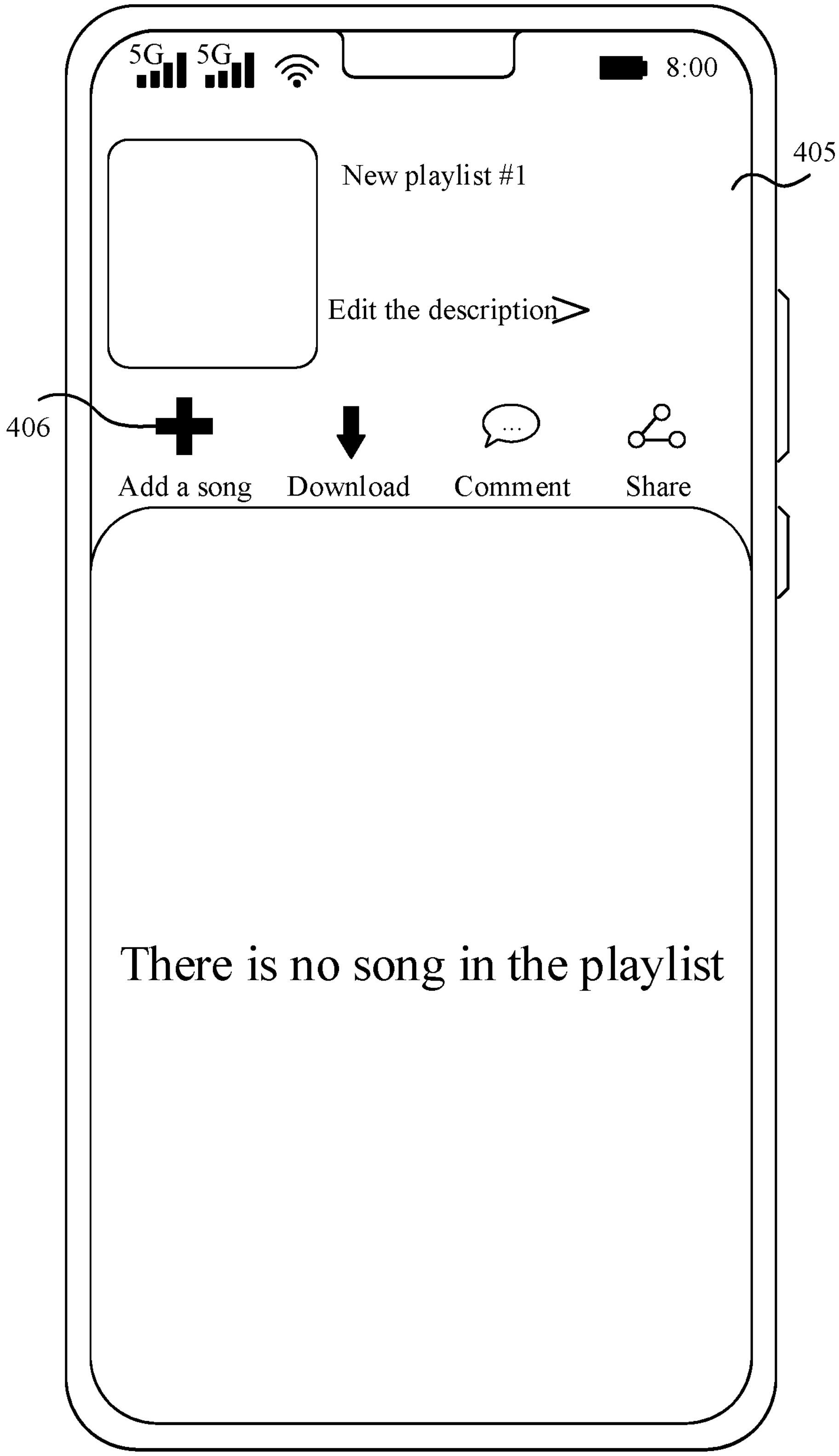
5G
5G
8:00
New playlist #1
Edit the description
405
406
Add a song
Download
Comment
Share
There is no song in the playlist

FIG. 4(c)

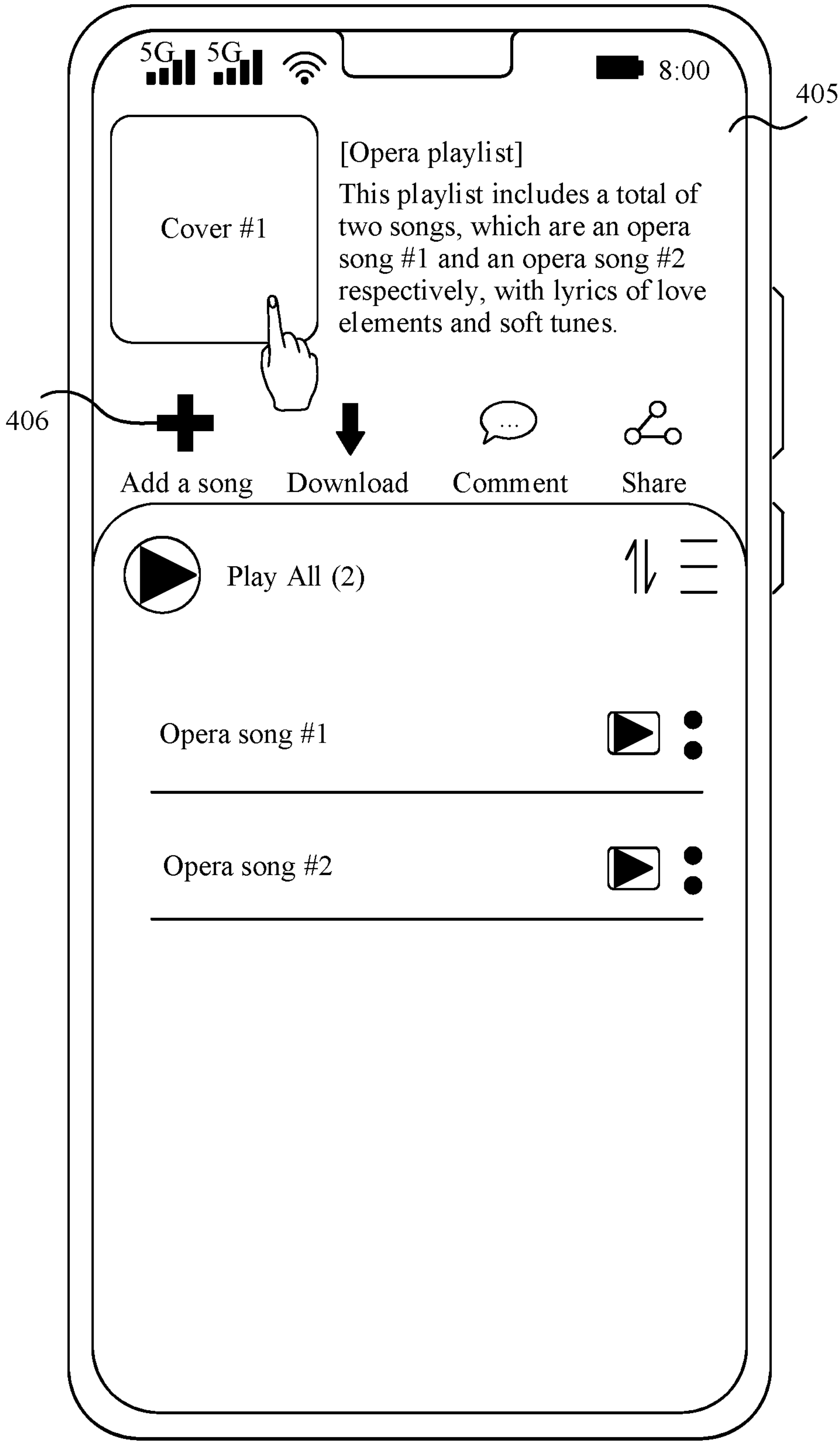
5G
5G
8:00
405
[Opera playlist]
This playlist includes a total of two songs, which are an opera song #1 and an opera song #2 respectively, with lyrics of love elements and soft tunes.
Cover #1
406
Add a song
Download
Comment
Share
Play All (2)
Opera song #1
Opera song #2

FIG. 4(d)

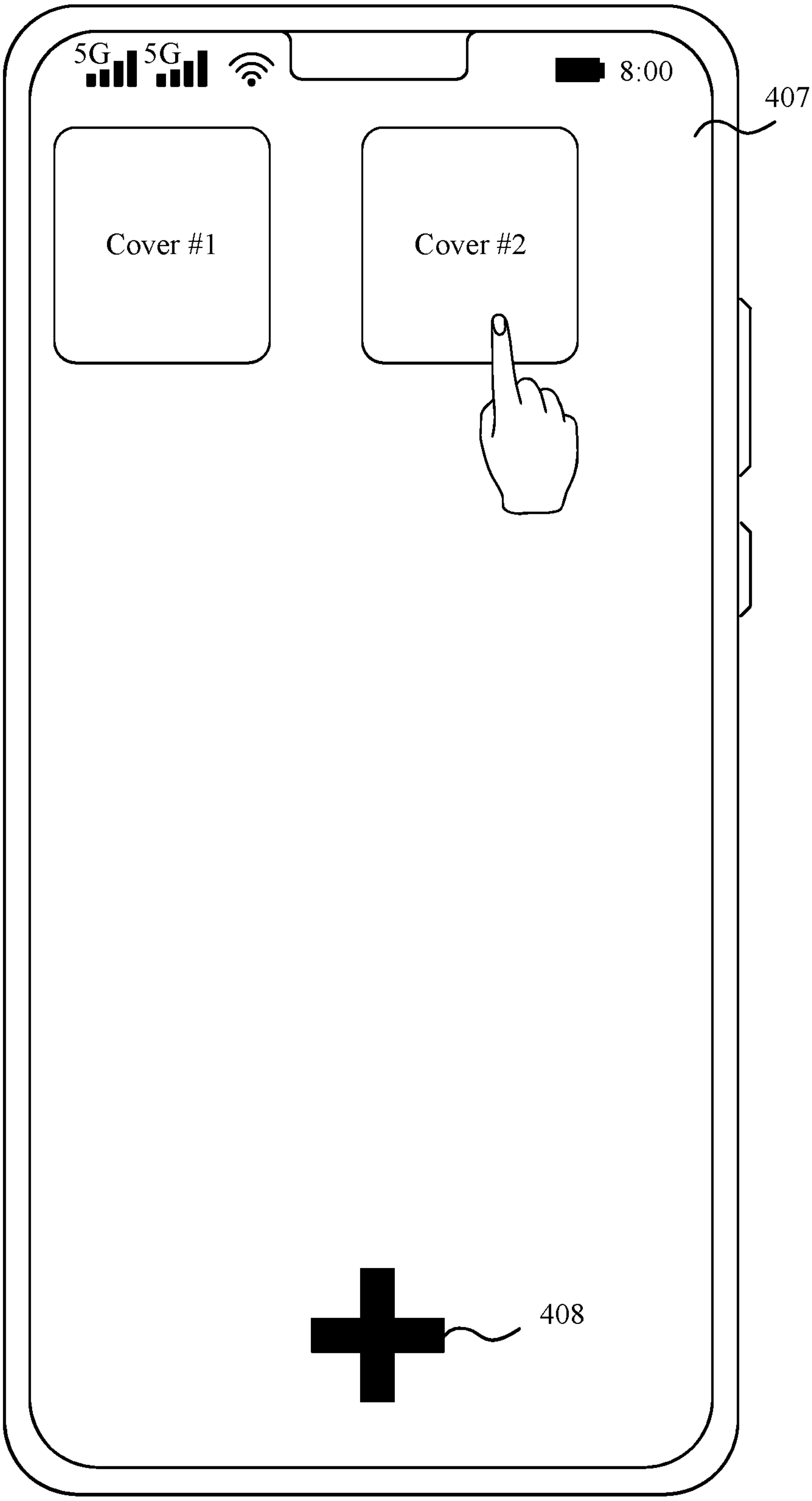


FIG. 4(e)

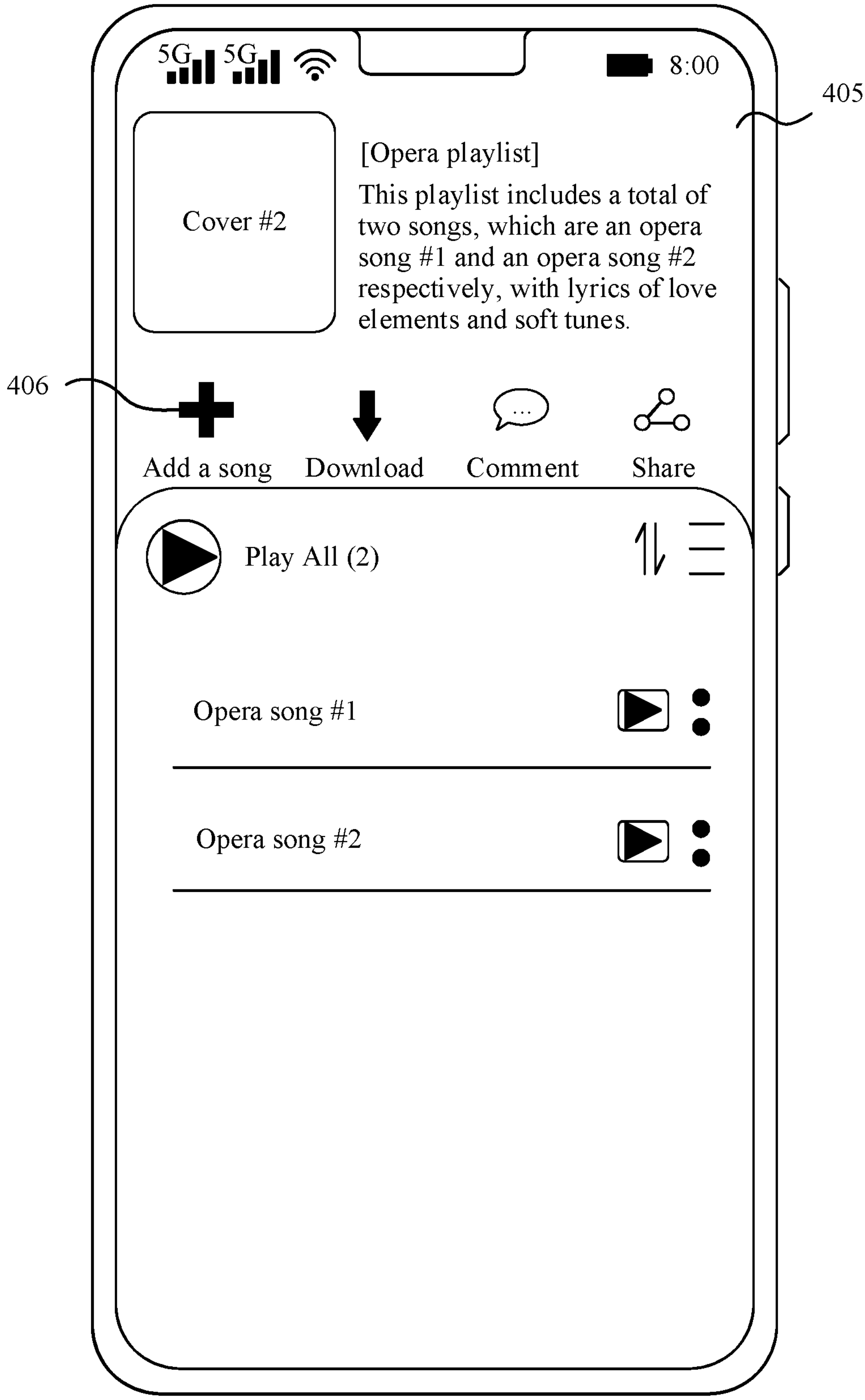
5G 5G
8:00
405
Cover #2
[Opera playlist]
This playlist includes a total of two songs, which are an opera song #1 and an opera song #2 respectively, with lyrics of love elements and soft tunes.
406
Add a song
Download
Comment
Share
Play All (2)
Opera song #1
Opera song #2

FIG. 4(f)

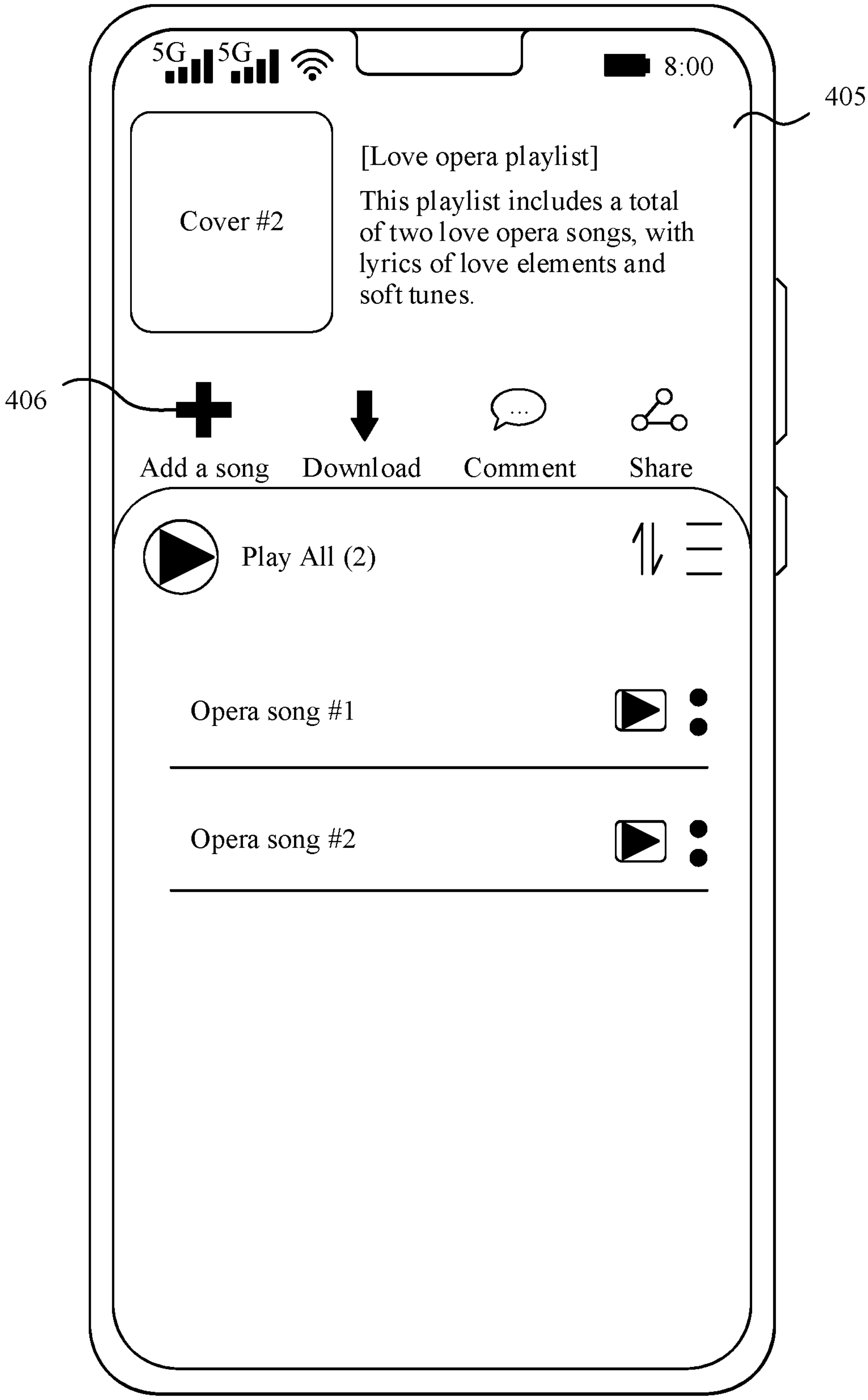
5G 5G
8:00
405
Cover #2
[Love opera playlist]
This playlist includes a total of two love opera songs, with lyrics of love elements and soft tunes.
406
Add a song
Download
Comment
Share
Play All (2)
Opera song #1
Opera song #2

FIG. 4(g)

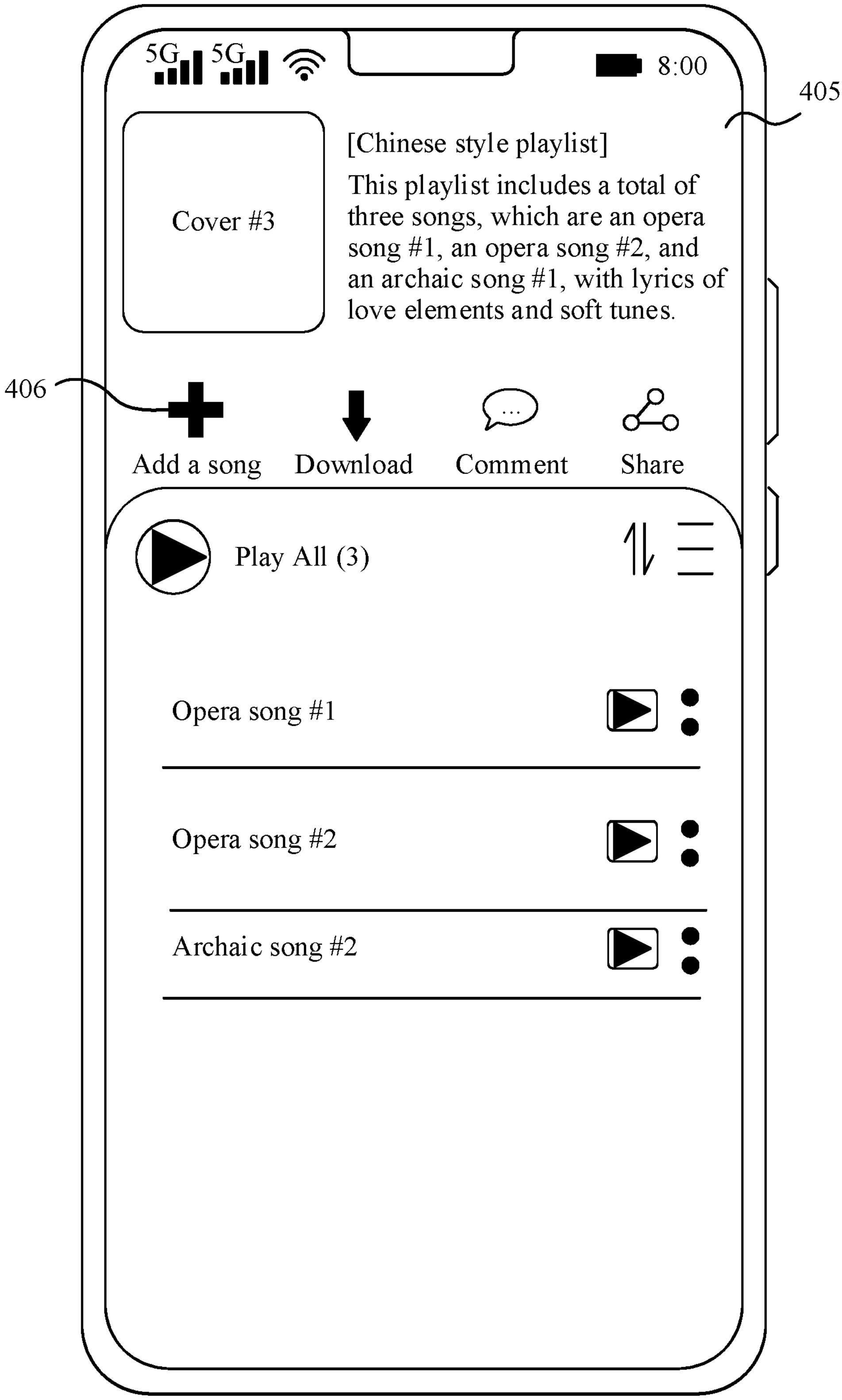
5G
5G
8:00
405
Cover #3
[Chinese style playlist]
This playlist includes a total of three songs, which are an opera song #1, an opera song #2, and an archaic song #1, with lyrics of love elements and soft tunes.
406
Add a song
Download
Comment
Share
Play All (3)
Opera song #1
Opera song #2
Archaic song #2

FIG. 4(h)

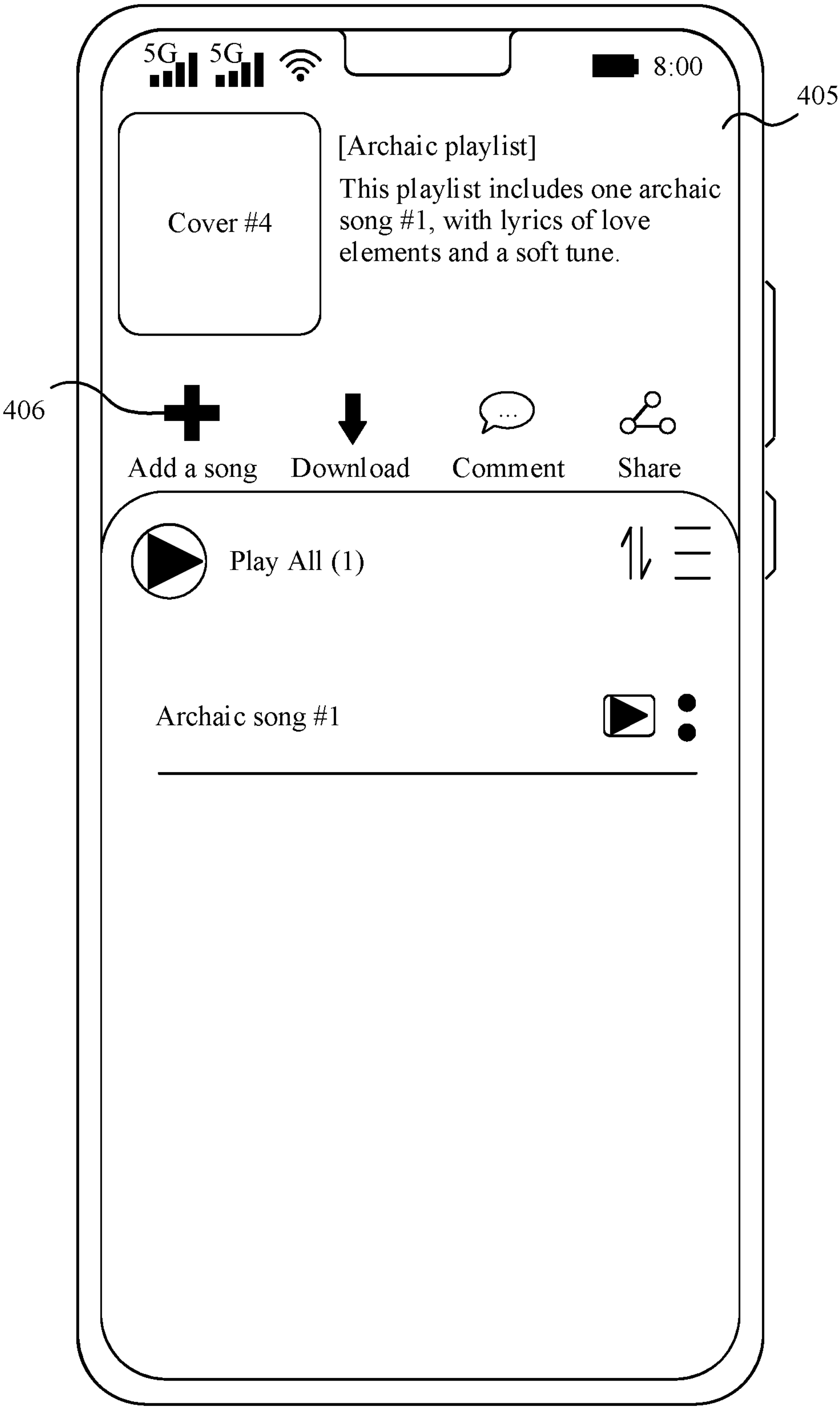
5G 5G
8:00
405
Cover #4
[Archaic playlist]
This playlist includes one archaic song #1, with lyrics of love elements and a soft tune.
406
Add a song
Download
Comment
Share
Play All (1)
Archaic song #1

FIG. 4(i)

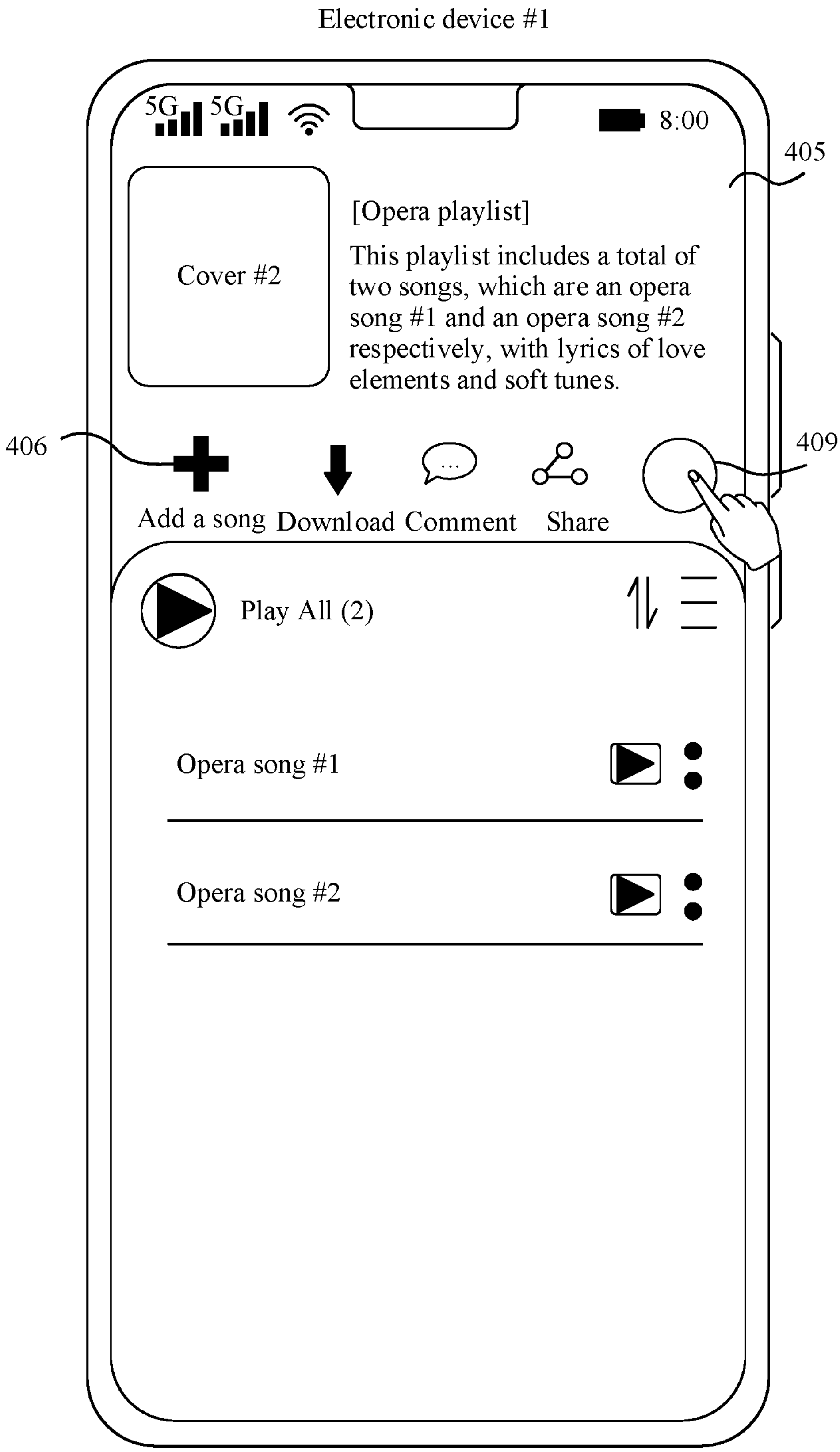
Electronic device #1
5G 5G
8:00
405
Cover #2
[Opera playlist]
This playlist includes a total of two songs, which are an opera song #1 and an opera song #2 respectively, with lyrics of love elements and soft tunes.
406
409
Add a song
Download
Comment
Share
Play All (2)
Opera song #1
Opera song #2

FIG. 4(j)

Electronic device #1

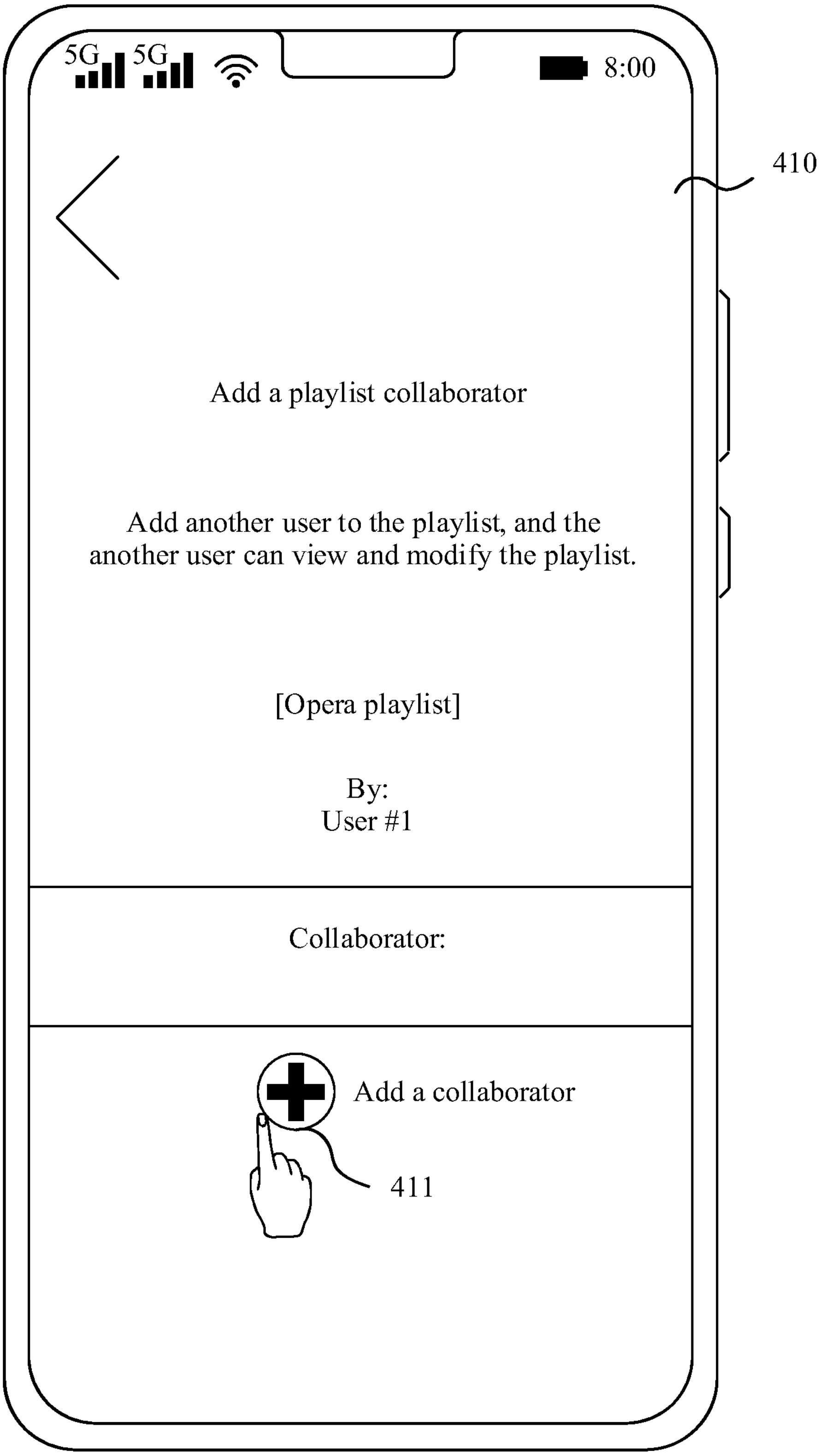


FIG. 4(k)

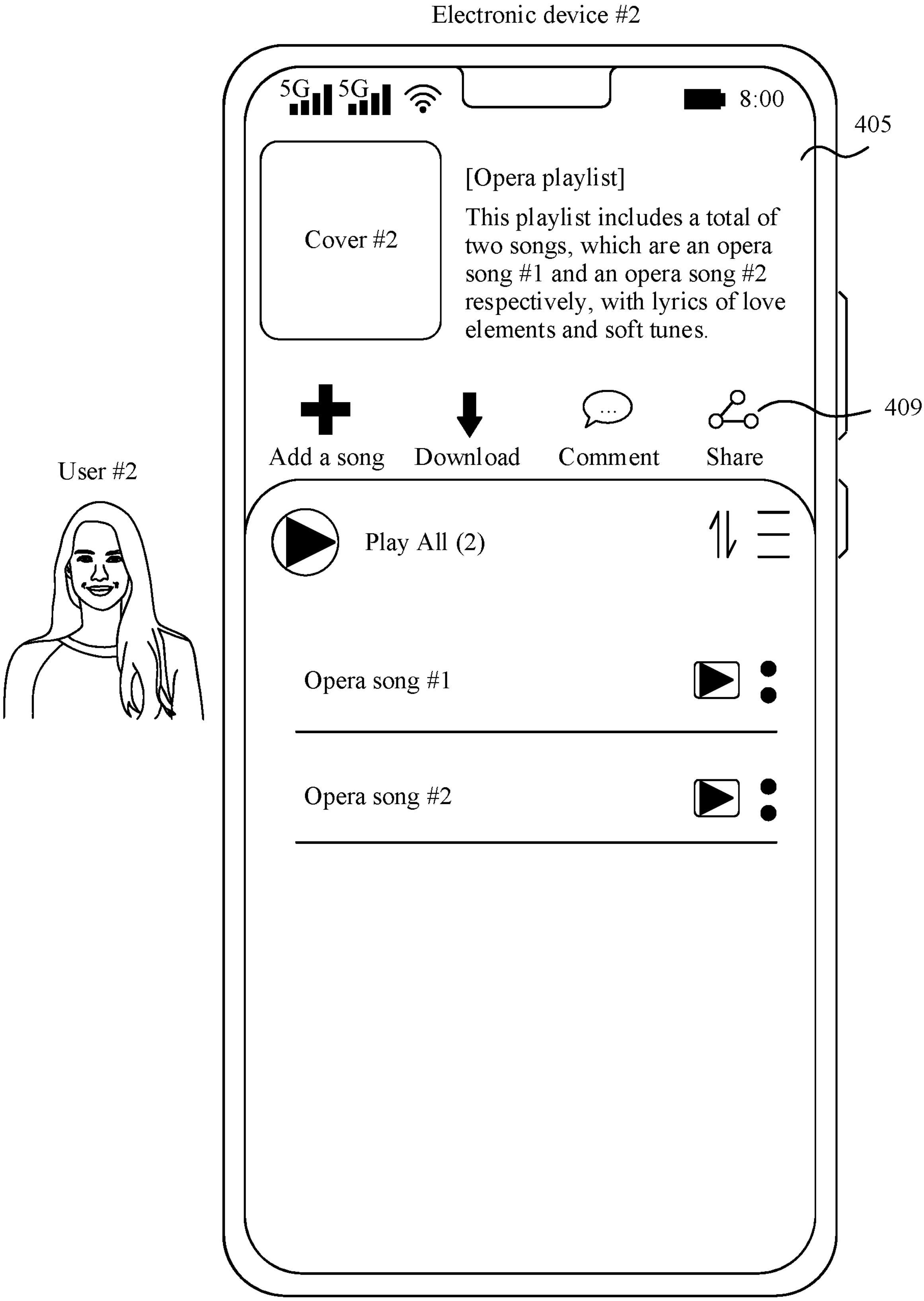
Electronic device #2
5G 5G
8:00
405
Cover #2
[Opera playlist]
This playlist includes a total of two songs, which are an opera song #1 and an opera song #2 respectively, with lyrics of love elements and soft tunes.
409
Add a song
Download
Comment
Share
User #2
Play All (2)
Opera song #1
Opera song #2

FIG. 4(1)

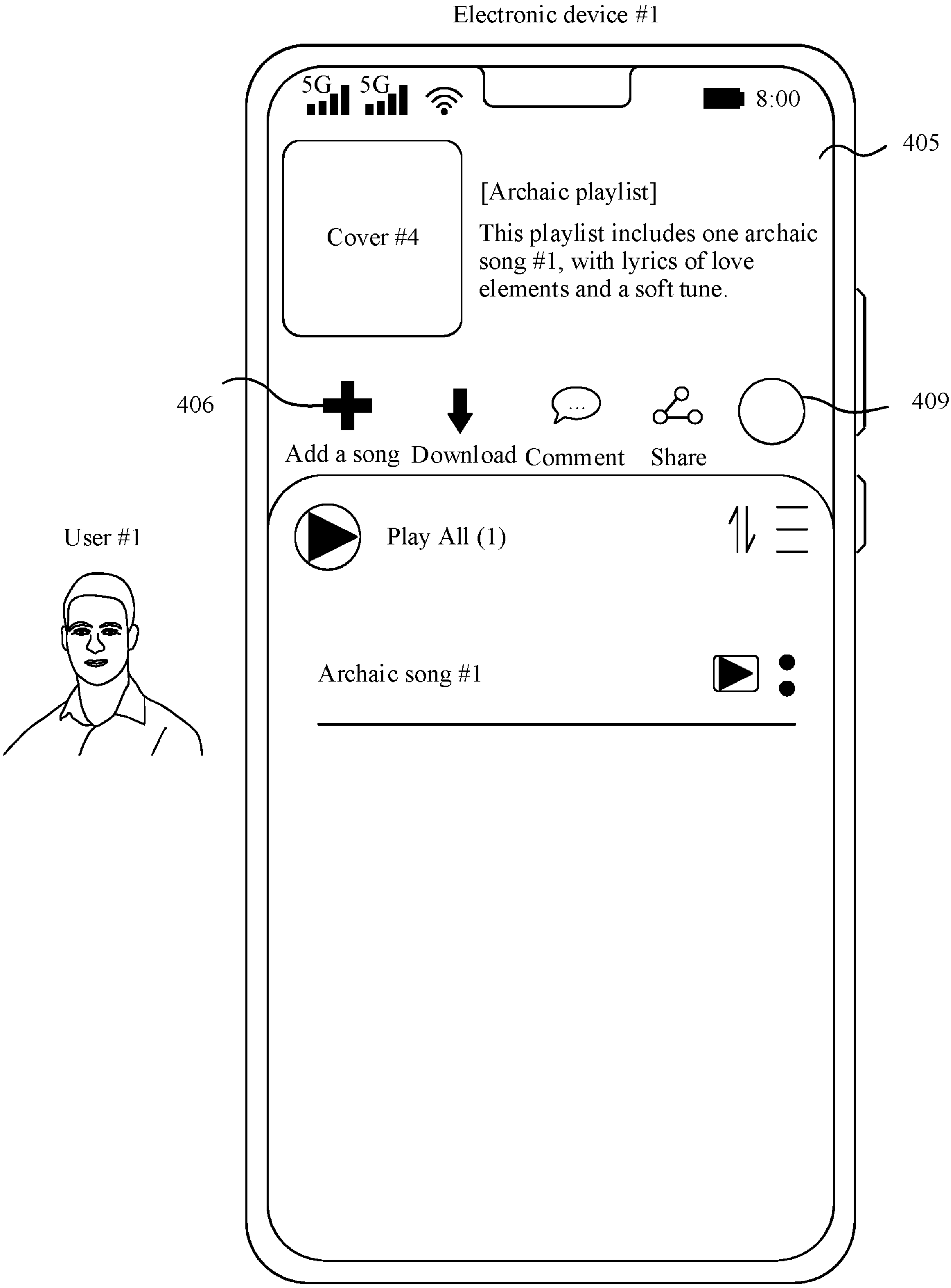
Electronic device #1
5G
5G
8:00
405
Cover #4
[Archaic playlist]
This playlist includes one archaic song #1, with lyrics of love elements and a soft tune.
406
409
Add a song
Download
Comment
Share
User #1
Play All (1)
Archaic song #1

FIG. 4(m)-1

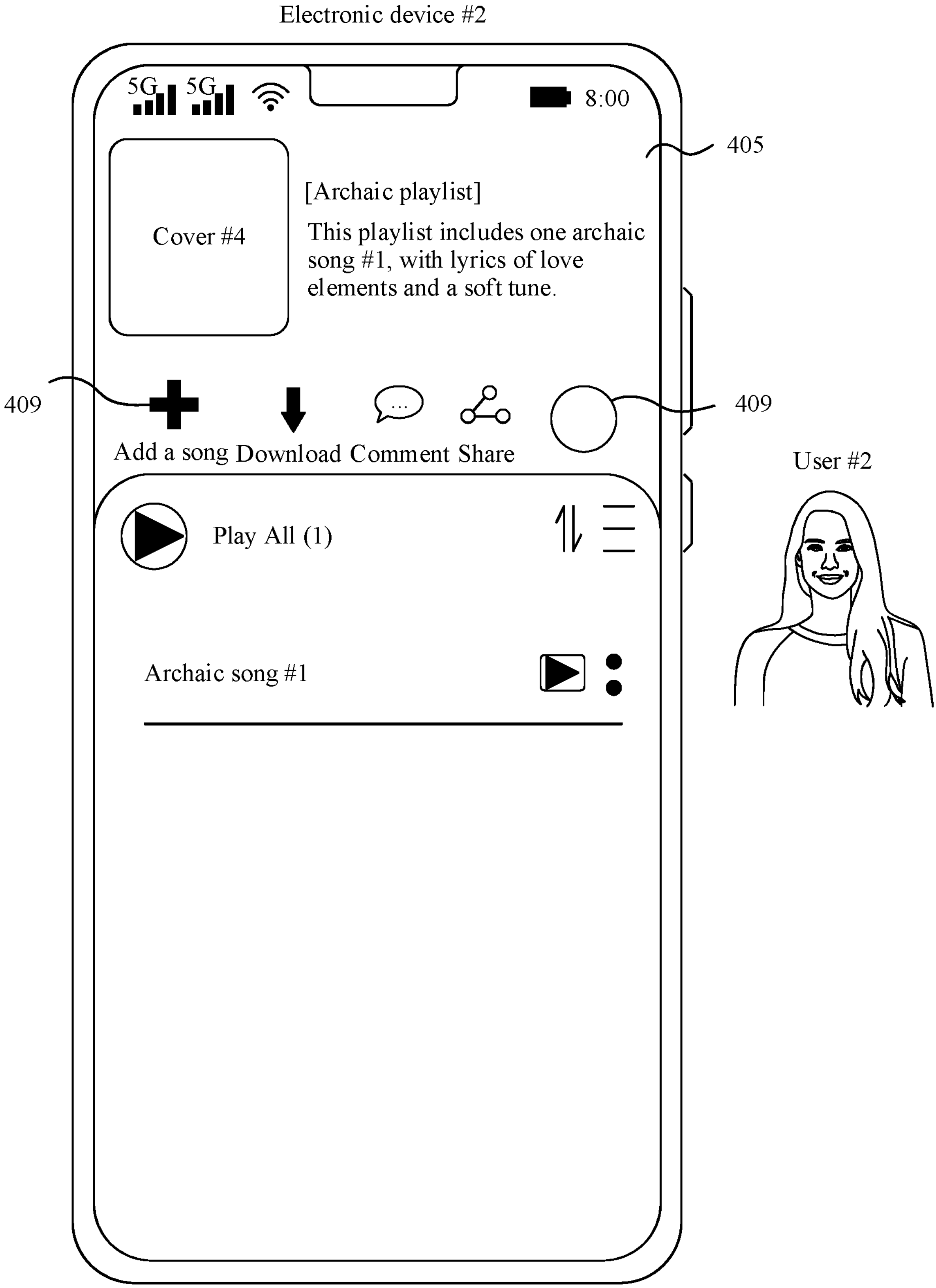
Electronic device #2
5G
5G
8:00
405
Cover #4
[Archaic playlist]
This playlist includes one archaic song #1, with lyrics of love elements and a soft tune.
409
409
Add a song
Download
Comment
Share
User #2
Play All (1)
Archaic song #1

FIG. 4(m)-2

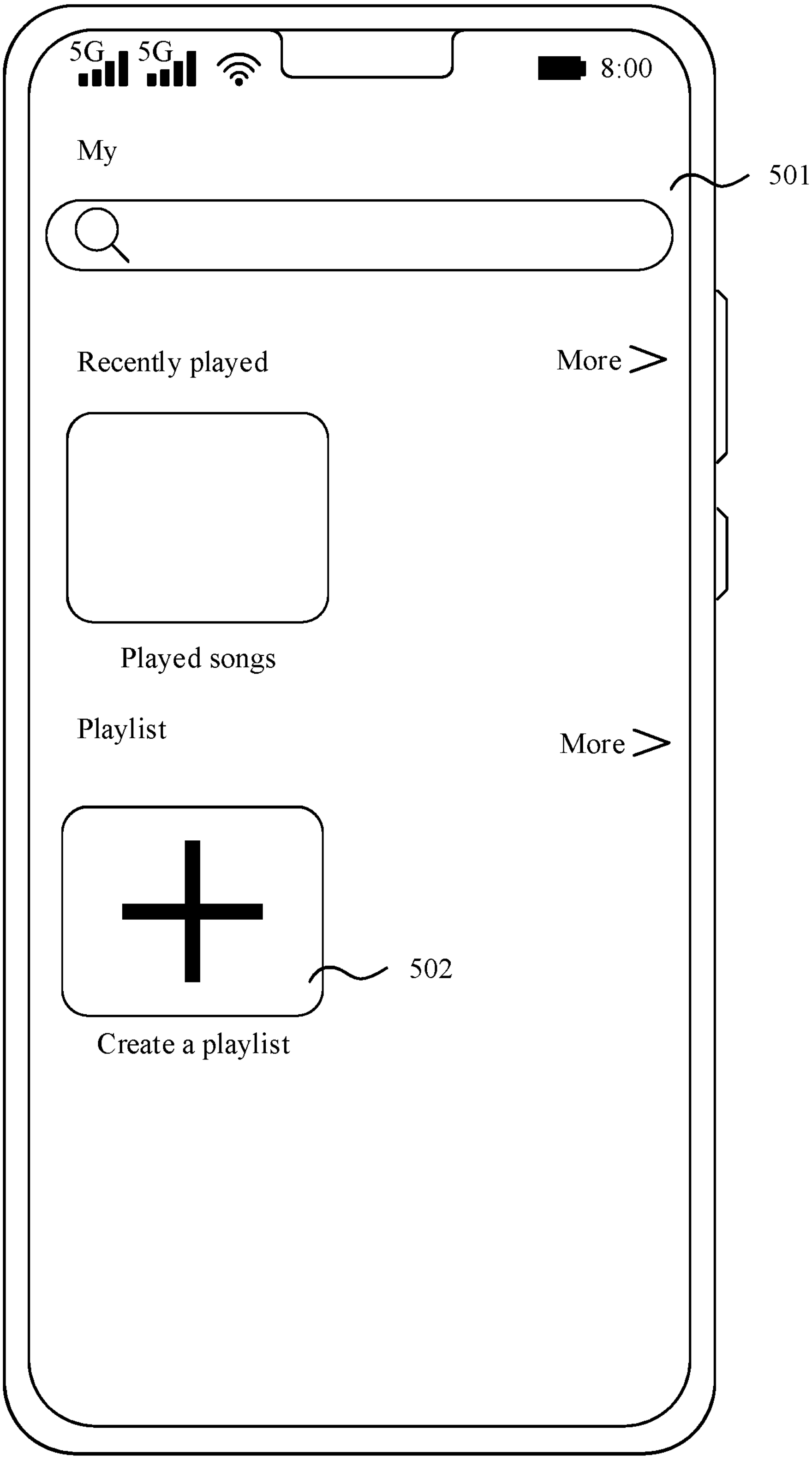
5G
5G
8:00
My
501
Recently played
More >
Played songs
Playlist
More >
502
Create a playlist

FIG. 5(a)

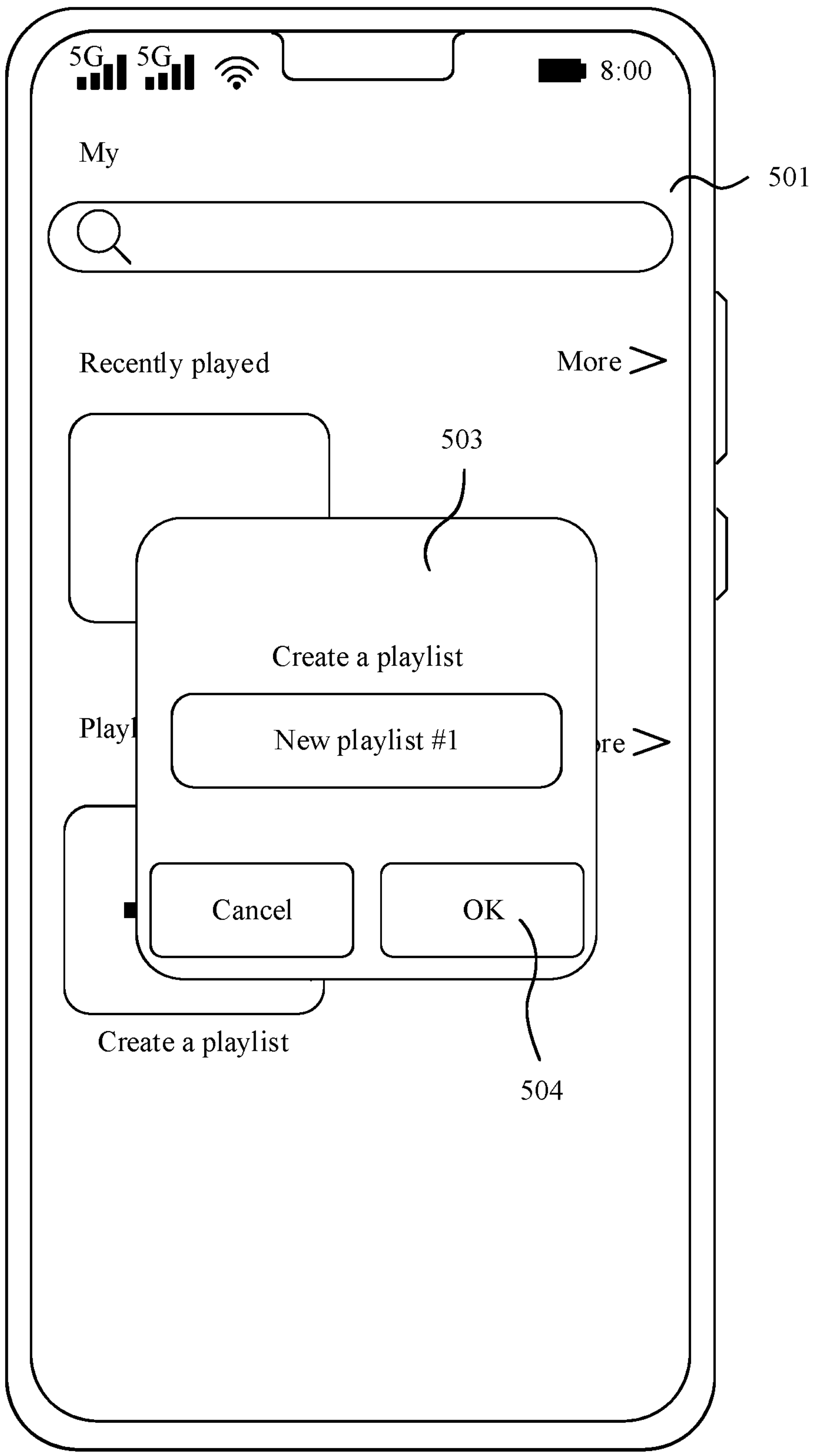
5G
5G
8:00
My
501
Recently played
More
503
Create a playlist
New playlist #1
Playl
ore
Cancel
OK
Create a playlist
504

FIG. 5(b)

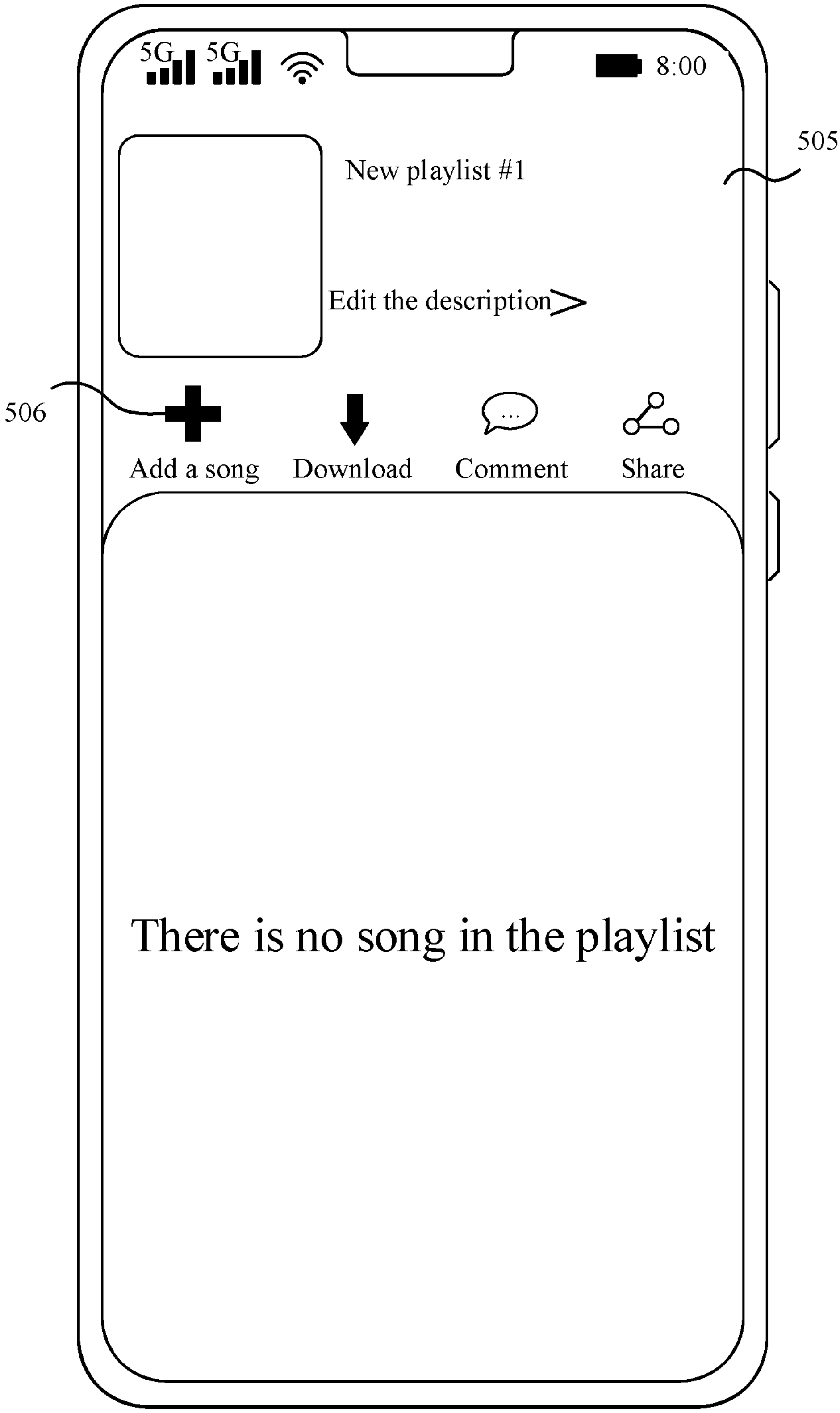
5G
5G
8:00
505
New playlist #1
Edit the description
506
Add a song
Download
Comment
Share
There is no song in the playlist

FIG. 5(c)

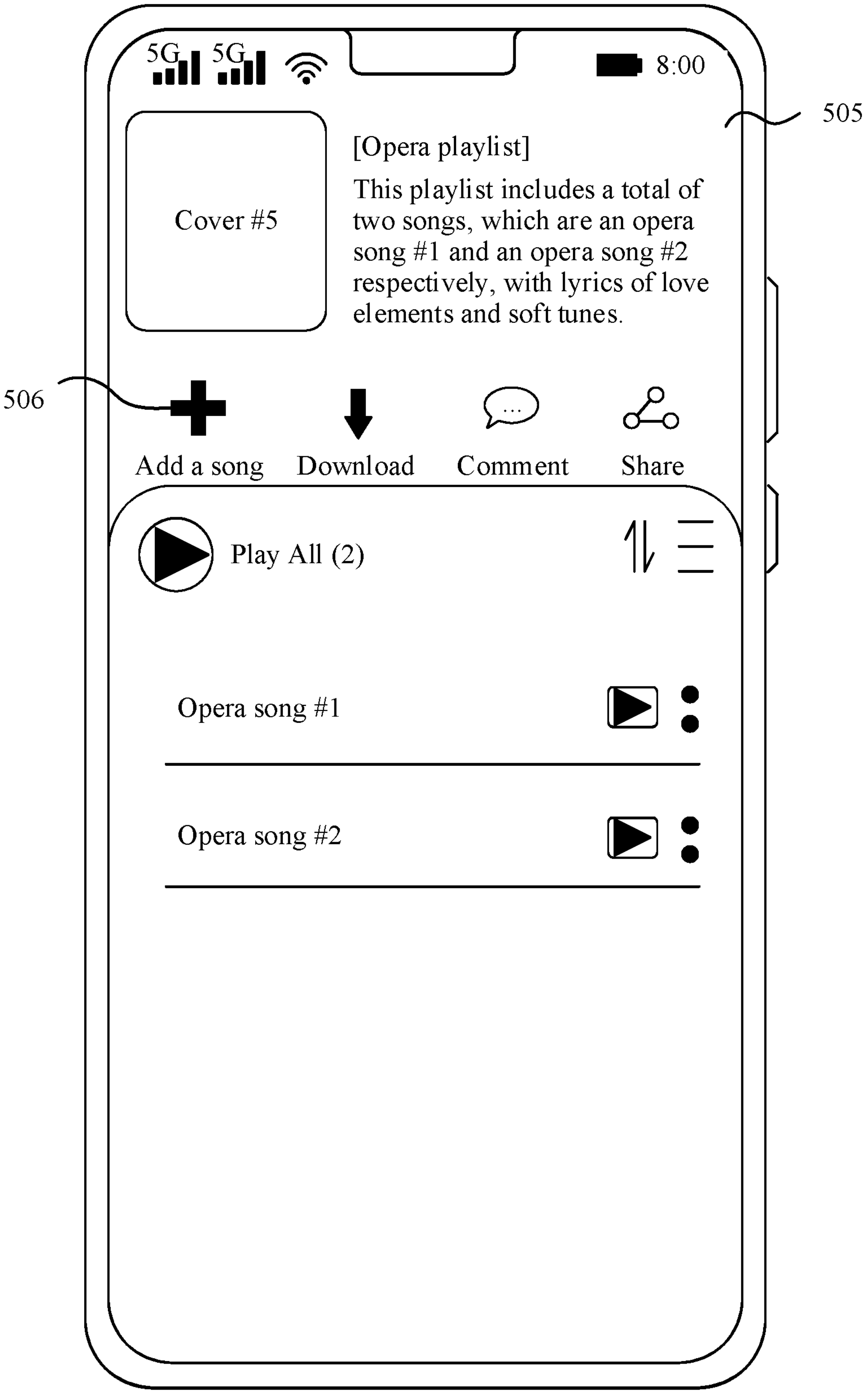
5G
5G
8:00
505
[Opera playlist]
This playlist includes a total of two songs, which are an opera song #1 and an opera song #2 respectively, with lyrics of love elements and soft tunes.
Cover #5
506
Add a song
Download
Comment
Share
Play All (2)
Opera song #1
Opera song #2

FIG. 5(d)

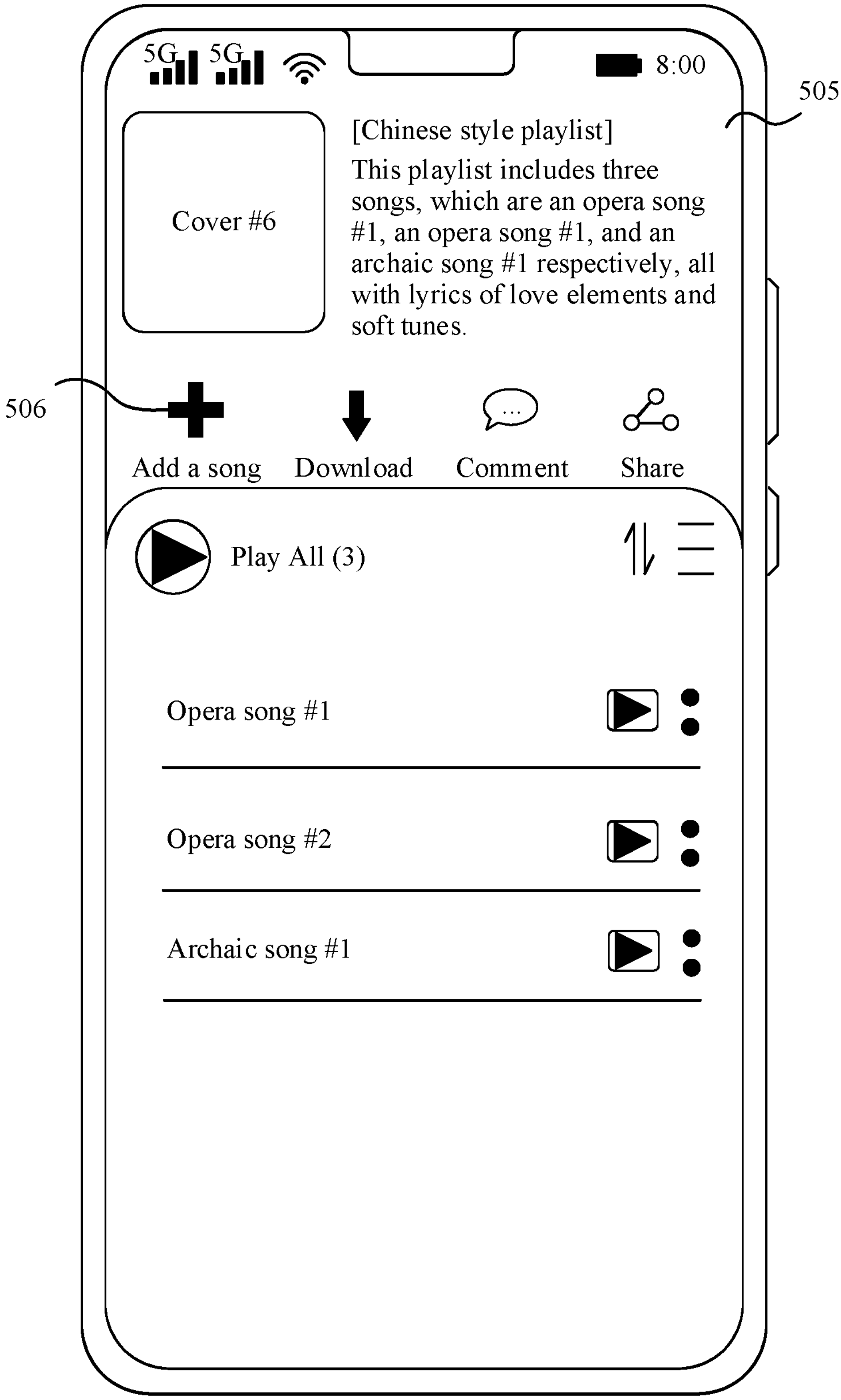
5G
5G
8:00
505
Cover #6
[Chinese style playlist]
This playlist includes three songs, which are an opera song #1, an opera song #1, and an archaic song #1 respectively, all with lyrics of love elements and soft tunes.
506
Add a song
Download
Comment
Share
Play All (3)
Opera song #1
Opera song #2
Archaic song #1

FIG. 5(e)

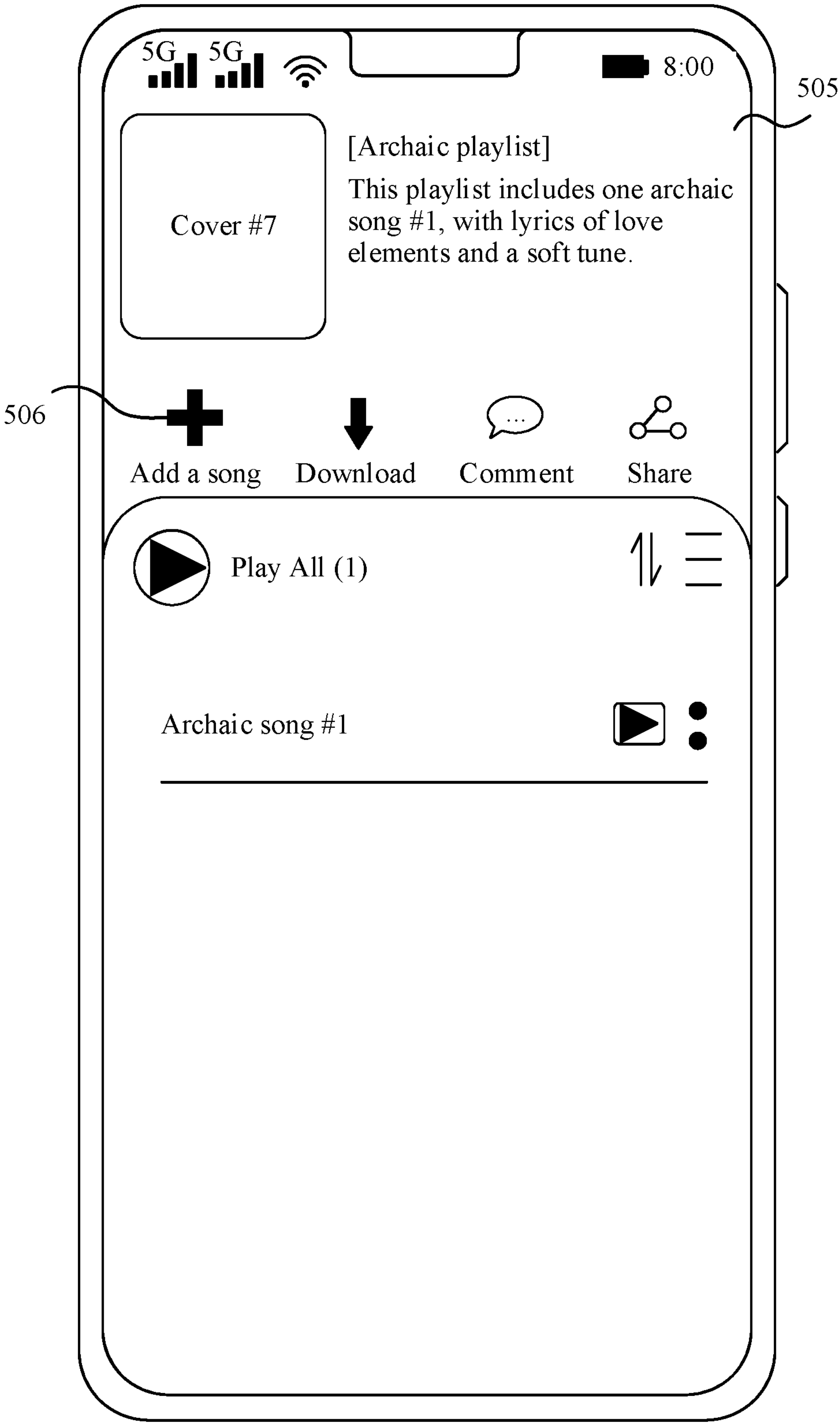
5G
5G
8:00
505
Cover #7
[Archaic playlist]
This playlist includes one archaic song #1, with lyrics of love elements and a soft tune.
506
Add a song
Download
Comment
Share
Play All (1)
Archaic song #1

FIG. 5(f)

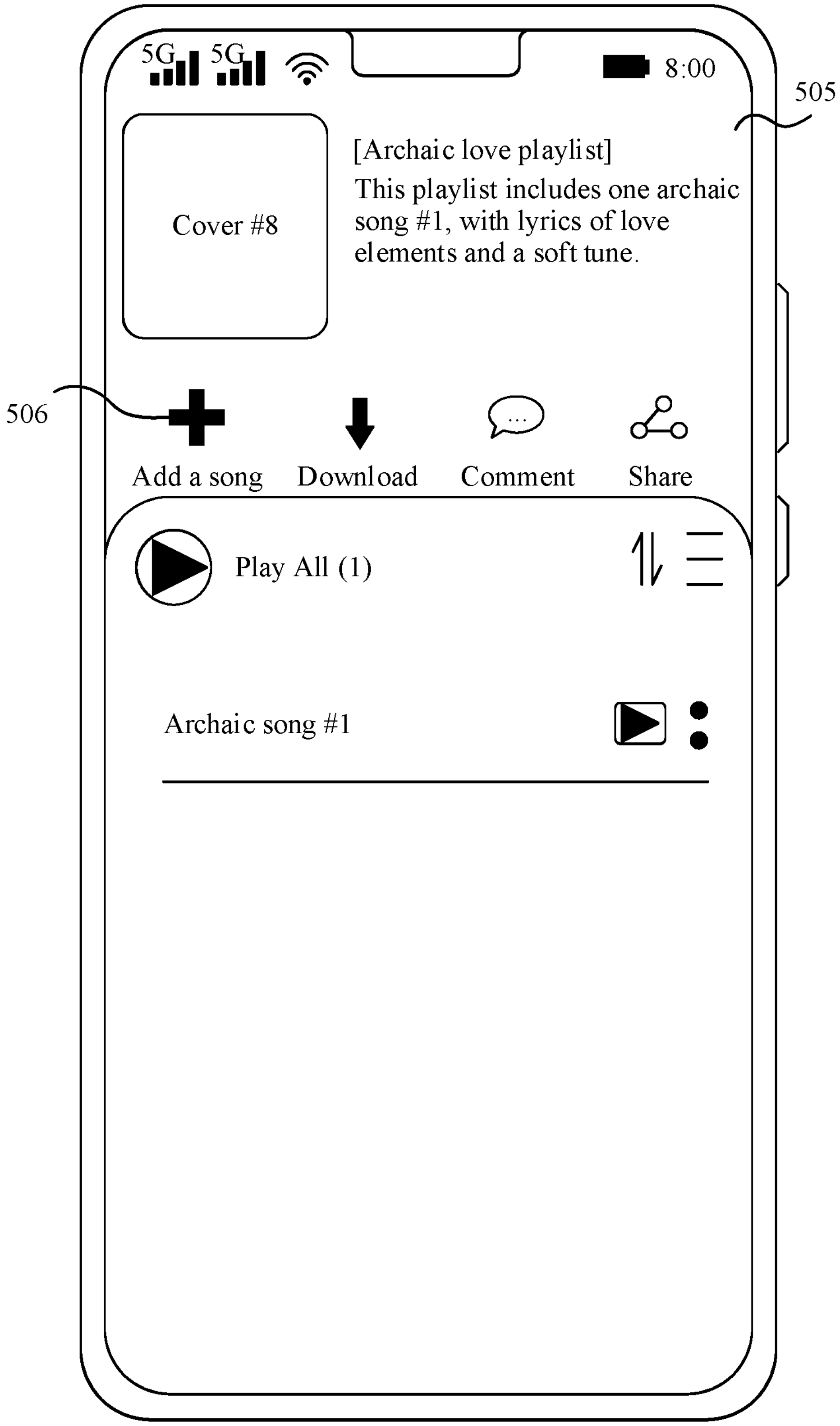
5G 5G
8:00
505
Cover #8
[Archaic love playlist]
This playlist includes one archaic song #1, with lyrics of love elements and a soft tune.
506
Add a song
Download
Comment
Share
Play All (1)
Archaic song #1

FIG. 5(g)

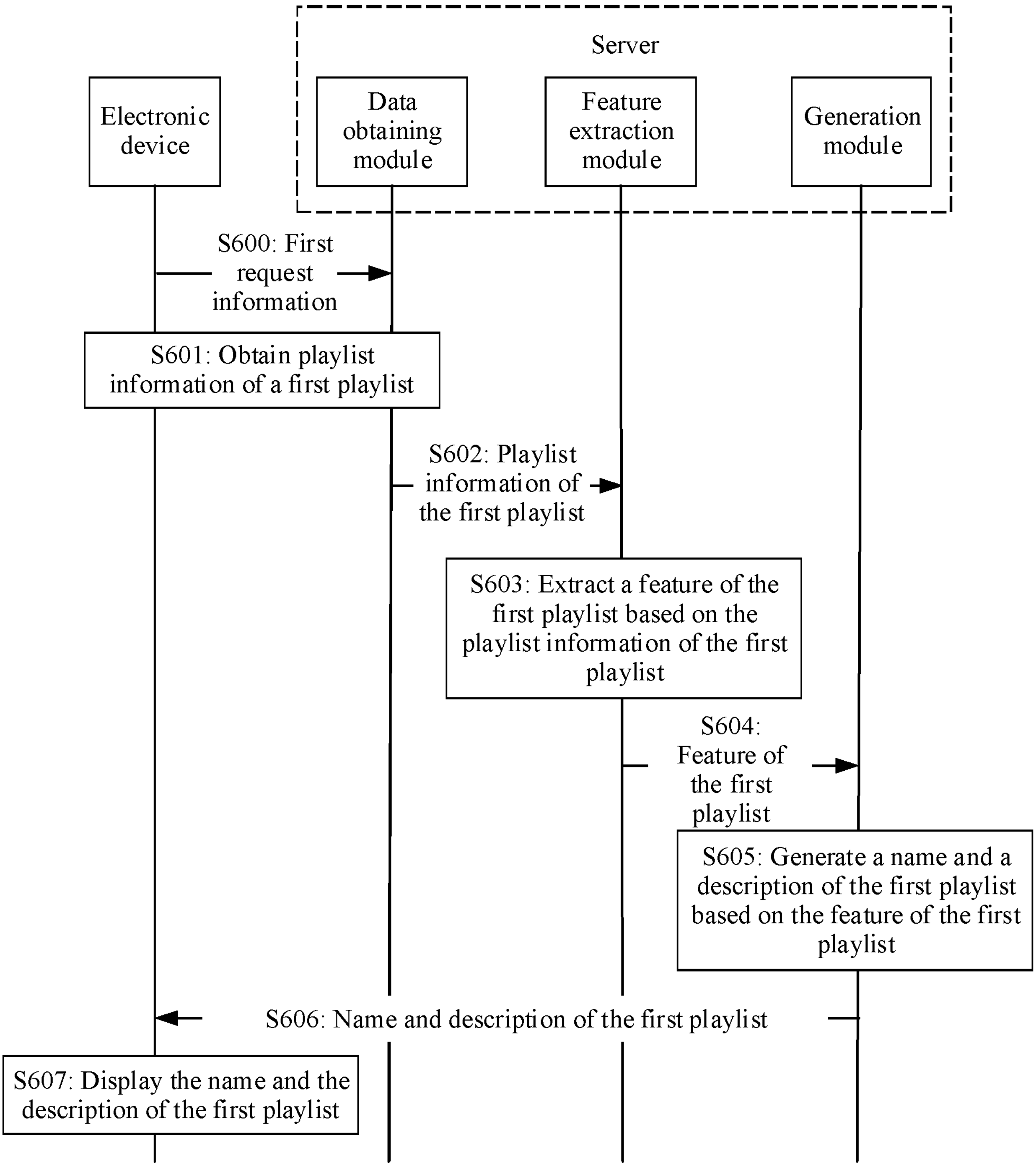
Server
Electronic device
Data obtaining module
Feature extraction module
Generation module
S600: First request information
S601: Obtain playlist information of a first playlist
S602: Playlist information of the first playlist
S603: Extract a feature of the first playlist based on the playlist information of the first playlist
S604: Feature of the first playlist
S605: Generate a name and a description of the first playlist based on the feature of the first playlist
S606: Name and description of the first playlist
S607: Display the name and the description of the first playlist

FIG. 6

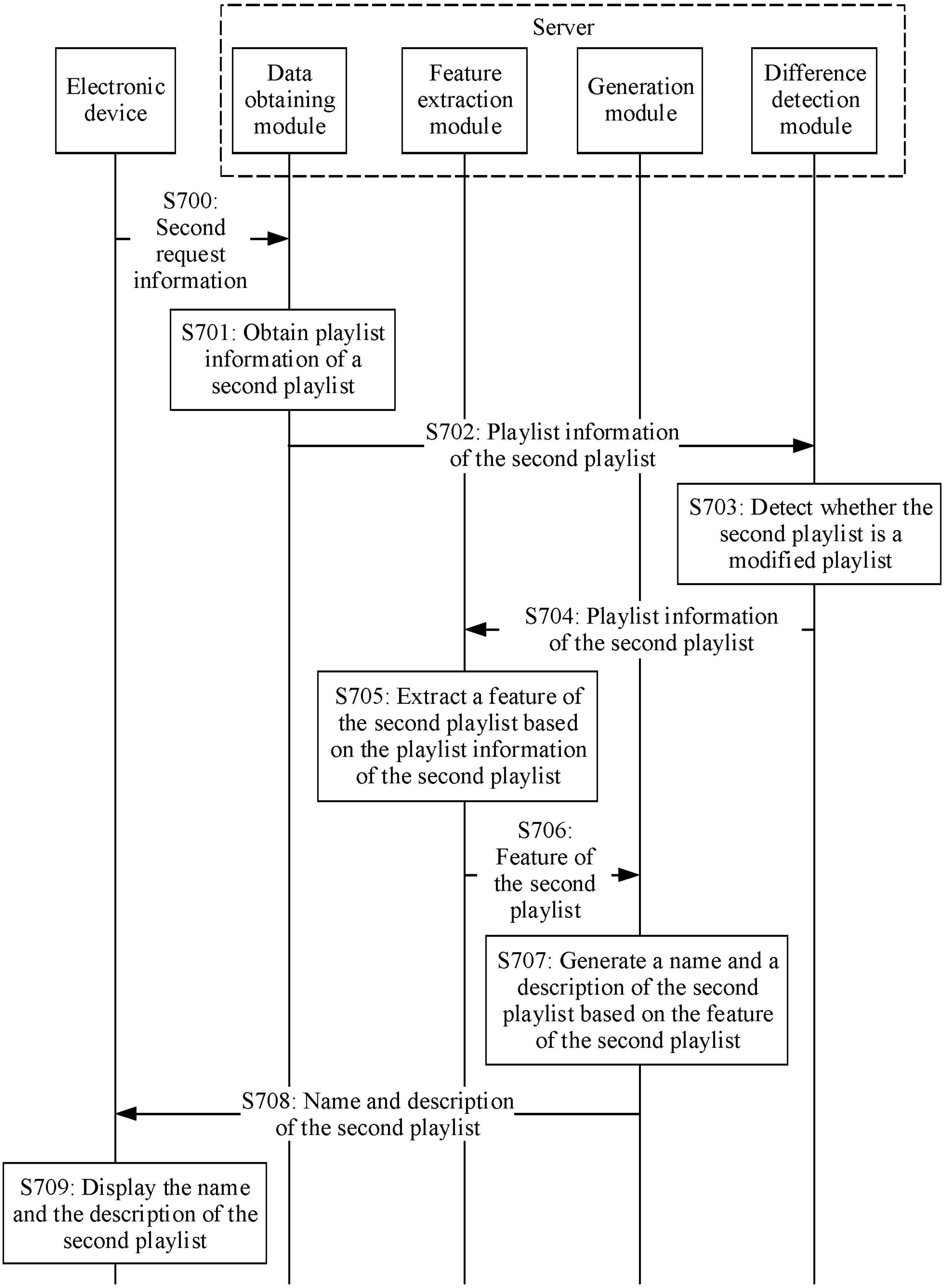
Server
Electronic device
Data obtaining module
Feature extraction module
Generation module
Difference detection module
S700: Second request information
S701: Obtain playlist information of a second playlist
S702: Playlist information of the second playlist
S703: Detect whether the second playlist is a modified playlist
S704: Playlist information of the second playlist
S705: Extract a feature of the second playlist based on the playlist information of the second playlist
S706: Feature of the second playlist
S707: Generate a name and a description of the second playlist based on the feature of the second playlist
S708: Name and description of the second playlist
S709: Display the name and the description of the second playlist

FIG. 7

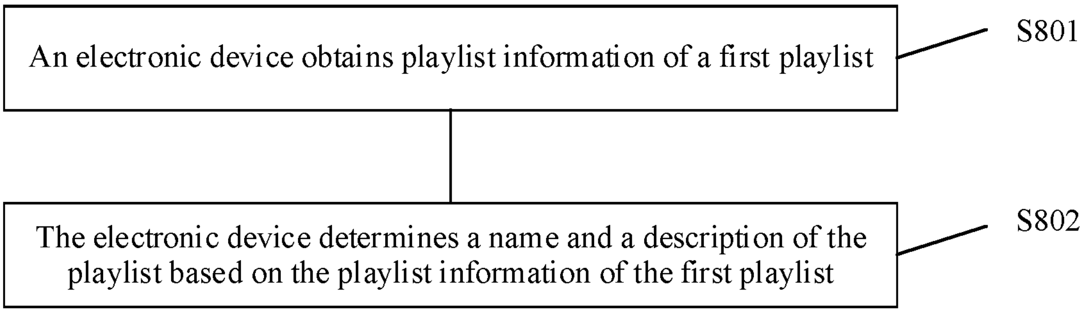


FIG. 8

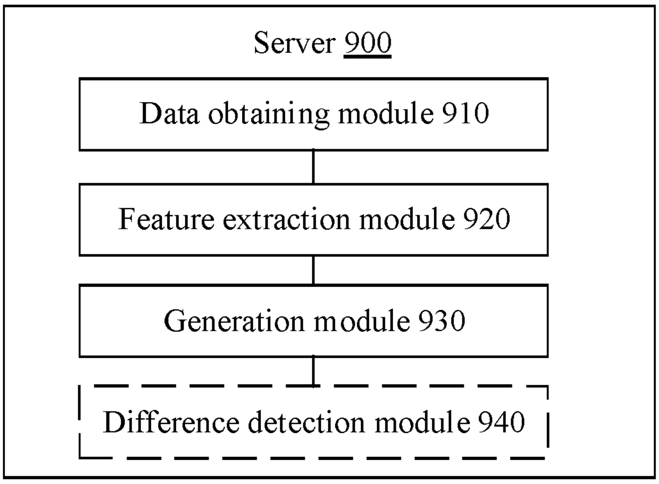


FIG. 9

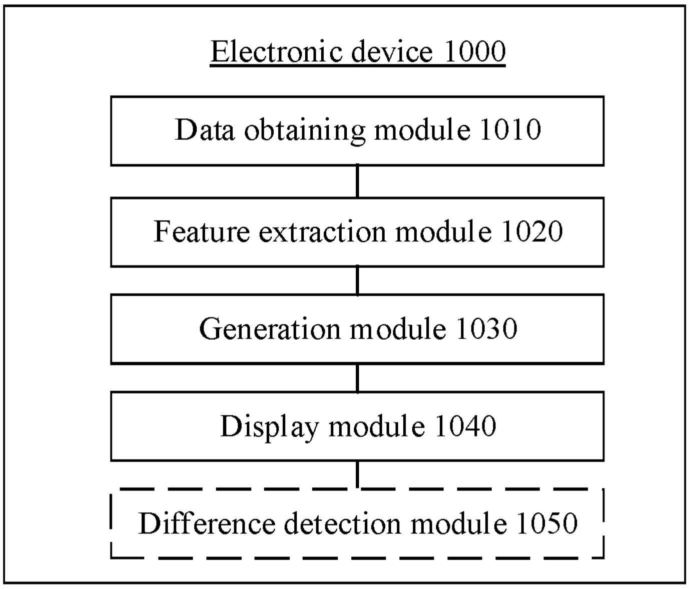


FIG. 10

## INTERNATIONAL SEARCH REPORT

International application No.
**PCT/CN2023/118842**

**A. CLASSIFICATION OF SUBJECT MATTER**

G06F 16/638(2019.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 歌单, 简介, 名称, 自动, 创建, 生成, 服务器, 发送, 获取, 用户, 标签, song list, brief introduction, name, voluntarily, establish, server, send, gain, user, label

**C. DOCUMENTS CONSIDERED TO BE RELEVANT**

| Category* | Citation of document, with indication, where appropriate, of the relevant passages | Relevant to claim No. |
|---|---|---|
| Y | CN 107193878 A (VIVO MOBILE COMMUNICATION CO., LTD.) 22 September 2017 (2017-09-22)<br>claims 1-14, and description, paragraphs [0019]-[0191] | 1-23 |
| Y | CN 114943006 A (BEIJING BYTEDANCE NETWORK TECHNOLOGY CO., LTD. et al.) 26 August 2022 (2022-08-26)<br>claims 1-14, and description, paragraphs [0035]-[0133] | 1-23 |
| A | CN 107133308 A (VIVO MOBILE COMMUNICATION CO., LTD.) 05 September 2017 (2017-09-05)<br>entire document | 1-23 |
| A | US 2023195285 A1 (BEIJING BYTEDANCE NETWORK TECHNOLOGY CO., LTD.) 22 June 2023 (2023-06-22)<br>entire document | 1-23 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 November 2023** | **01 December 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/118842**

| Patent document cited in search report | | | Publication date (day/month/year) | Patent family member(s) | | | Publication date (day/month/year) |
|---|---|---|---|---|---|---|---|
| CN | 107193878 | A | 22 September 2017 | None | | | |
| CN | 114943006 | A | 26 August 2022 | None | | | |
| CN | 107133308 | A | 05 September 2017 | None | | | |
| US | 2023195285 | A1 | 22 June 2023 | EP | 4213005 | A1 | 19 July 2023 |
| | | | | WO | 2022198811 | A1 | 29 September 2022 |
| | | | | IN | 202127045285 | A | 02 December 2022 |
| | | | | CN | 113050857 | A | 29 June 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211206943